# EUROPEAN PATENT APPLICATION

(11) **EP 4 691 580 A1**
(43) Date of publication of application: **11.02.2026**
(21) Application number: 24844835.9
(22) Date of filing: 25.07.2024
(51) Int. Cl.: A63F 13/52, A63F 13/537, G06T 15/02, G06T 15/04

(54) **DEVICE-CLOUD COLLABORATION RENDERING METHOD AND RELATED APPARATUS**

(30) Priority: 27.07.2023 CN 202310940383
(71) Applicant: Huawei Technologies Co., Ltd., Shenzhen, Guangdong 518129 (CN)
(72) Inventor: XU, Baolei, Shenzhen, Guangdong 518129 (CN); GAO, Hongyan, Shenzhen, Guangdong 518129 (CN); WANG, Xiaojie, Shenzhen, Guangdong 518129 (CN); WANG, Wei, Shenzhen, Guangdong 518129 (CN); MAO, Yuanxing, Shenzhen, Guangdong 518129 (CN)
(74) Representative: MERH-IP Matias Erny Reichl Hoffmann Patentanwälte PartG mbB
(86) International application number: PCT/CN2024/107527
(87) International publication number: WO 2025/021149

(57) **Abstract**

This application discloses a device-cloud collaborative rendering method. The method includes: An electronic device performs basic rendering on a first device-side scene to obtain first basic rendering data; the electronic device sends a scene identifier of the first device-side scene and a first advanced rendering type to a server; the server stores a first cloud-side scene transformed from the first device-side scene for the first advanced rendering type; the electronic device sends first status data to the server; the server updates the first cloud-side scene based on the first status data, and performs preprocessing of the first advanced rendering type on the first cloud-side scene, to obtain first preprocessing data; the server sends the first preprocessing data to the electronic device; and the electronic device obtains a first image based on the first basic rendering data and the first preprocessing data, and displays the first image. In this way, a computing power requirement for and load of a device-side GPU are reduced, so that an electronic device with a low GPU computing power can also present advanced rendering effect, thereby effectively improving user experience.

## Description

This application claims priority to Chinese Patent Application No. 202310940383.X, filed with the China National Intellectual Property Administration on July 27, 2023 and entitled "DEVICE-CLOUD COLLABORATIVE RENDERING METHOD AND RELATED APPARATUS", which is incorporated herein by reference in its entirety.

### TECHNICAL FIELD

This application relates to the field of electronic technologies, and in particular, to a device-cloud collaborative rendering method and a related apparatus.

### BACKGROUND

Three-dimensional (three-dimensional, 3D) applications (such as 3D games and 3D modeling software) on terminal devices such as mobile phones are increasing. Providing a rendering capability for the 3D applications is a core function of the terminal devices for supporting running of the 3D applications. However, a graphics processing unit (graphics processing unit, GPU) (for ease of description, referred to as a lightweight GPU) of a terminal device (for example, a mobile device) whose size and power consumption are limited has a considerable gap compared with a personal computer (Personal Computer, PC)-level GPU. For example, single-precision computing power of the Apple A15 in 2021 was 1.5 TFLOPS, but single-precision computing power of the NVIDIA GTX 580 in 2010 has reached 1.58 TFLOPS, and computing power of the NVIDIA RTX 3080Ti in 2021 has reached 27.955 TFLOPS. It can be learned that computing power development of the lightweight GPU on the mobile device lags behind the PC-level GPU by about ten years.

A GPU on a cloud server (namely, the PC-level GPU) has a huge computing power advantage over the lightweight GPU on the mobile device. With development of cloud computing technologies, transferring computing power of a device side to a cloud side to collaborate with the cloud side to process a service on the device side is gradually becoming a technology evolution direction. Currently, how to collaborate with the cloud side to implement efficient rendering processing, to achieve rendering effect of a ray tracing technology on the device side remains to be studied.

### SUMMARY

This application provides a device-cloud collaborative rendering method and a related apparatus, to reduce a computing power requirement for and load of a device-side GPU, so that an electronic device with low GPU computing power can also present advanced rendering effect, for example, rendering effect of a ray tracing technology. This effectively improves user experience.

According to a first aspect, this application provides a device-cloud collaborative rendering method, applied to a communication system. The communication system includes a first electronic device and a server. The first electronic device stores at least one device-side scene of a first application, and a first device-side scene is any one of the at least one device-side scene. The server stores a first cloud-side scene transformed from the first device-side scene for a first advanced rendering type. The method includes: The first electronic device performs basic rendering on the first device-side scene to obtain first basic rendering data; the first electronic device sends a scene identifier of the first device-side scene and the first advanced rendering type to the server; the first electronic device sends first status data to the server, where the first status data includes data that is in status data of the first device-side scene and that is related to preprocessing of the first advanced rendering type; the server updates the first cloud-side scene based on the first status data, and performs preprocessing of the first advanced rendering type on an updated first cloud-side scene, to obtain first preprocessing data; the server sends the first preprocessing data to the first electronic device; the first electronic device obtains a first image based on the first basic rendering data and the first preprocessing data, where the first image has lighting effect of the first advanced rendering type; and the first electronic device displays the first image.

During implementation of this embodiment of this application, one device-side scene is transformed into one cloud-side scene for each advanced rendering type, and the server stores the cloud-side scene. For a specific advanced rendering type, the electronic device needs to have only a capability of performing basic rendering on a device-side scene, and the server implements preprocessing of advanced rendering on a cloud-side scene corresponding to the device-side scene. After basic rendering data is fused with the preprocessing data of advanced rendering, a finally rendered image presents lighting effect of the specific advanced rendering type. In this way, for various advanced rendering types, a computing power requirement for and load of a device-side GPU can be reduced. The electronic device (for example, a mobile phone or a tablet) can present advanced rendering effect without requiring high-standard hardware performance. In addition, because the server performs only preprocessing of advanced rendering and does not run a full APP, consumption of computing resources on a cloud side is reduced.

In an implementation, the method further includes: The first electronic device updates scene information of the first device-side scene; the first electronic device performs basic rendering on an updated first device-side scene, to obtain second basic rendering data; when a network speed between the first electronic device and the server is less than a preset value, or a network between the first electronic device and the server is disconnected, the first electronic device determines a second image based on second basic rendering data; and the first electronic device displays the second image. During implementation of this embodiment of this application, when a network condition is poor, the electronic device can still perform basic rendering, and ensure normal running of a game APP, to ensure basic operation experience of a user.

In an implementation, that the first electronic device sends the scene identifier of the first device-side scene and the first advanced rendering type to the server includes: The first electronic device sends a first request to the server, where the first request includes the scene identifier of the first device-side scene and the first advanced rendering type. Before the first electronic device sends the first status data to the server, the method further includes: The server performs preprocessing preparation based on the first request, where the preprocessing preparation includes loading the first cloud-side scene and preparing a rendering pipeline used for preprocessing of the first advanced rendering type; and the server sends confirmation information to the first electronic device, where the confirmation information indicates that the preprocessing preparation is completed. That the first electronic device sends the first status data to the server includes: The first electronic device sends the first status data to the server based on the confirmation information. During implementation of this embodiment of this application, the status data is uploaded to the server only after it is determined that the server has completed the preprocessing preparation. This avoids invalid upload of the status data and a waste of network traffic that are caused because the server cannot perform advanced rendering.

In an implementation, the status data of the first device-side scene includes a part or all of the following: scene identification information, light source information, role information, camera information, and scene update information.

In an implementation, the server stores a first correspondence among the first device-side scene, the first advanced rendering type, and the first cloud-side scene. Before the server updates the first cloud-side scene based on the first status data, the method further includes: The server determines, based on the first correspondence, the scene identifier of the first device-side scene, and the first advanced rendering type, that a to-be-rendered cloud-side scene is the first cloud-side scene. During implementation of this embodiment of this application, the server stores the correspondence among the first device-side scene, the first advanced rendering type, and the first cloud-side scene, to quickly locate the to-be-rendered cloud-side scene based on the scene identifier of the first device-side scene and the first advanced rendering type that are uploaded by a device side.

In an implementation, the scene identifier of the first device-side scene and the first advanced rendering type are obtained by the first electronic device from an application package of a first application; and a scene identifier of the first cloud-side scene and the first correspondence among the first device-side scene, the first advanced rendering type, and the first cloud-side scene are deployed on the server during application development of the first application.

In an implementation, the server stores a second cloud-side scene transformed from the first device-side scene for a second advanced rendering type. In this embodiment of this application, one device-side scene is transformed into one cloud-side scene for each advanced rendering type.

In an implementation, that the server sends the first preprocessing data to the first electronic device includes: The server sends the compressed and encoded first preprocessing data to the first electronic device. Before the first electronic device obtains the first image based on the first basic rendering data and the first preprocessing data, the method further includes: The first electronic device decodes the received first preprocessing data, to obtain the decoded first preprocessing data. During implementation of this embodiment of this application, the server feeds back the compressed and encoded preprocessing data to the first electronic device, so that an amount of transmitted data can be reduced, and a transmission delay can be reduced.

In an implementation, the first advanced rendering type is global illumination. The first preprocessing data includes irradiance that is of each pixel in an imaging picture and that is obtained through preprocessing of global illumination, and the first preprocessing data includes irradiance of each pixel in an imaging picture obtained through basic rendering. Irradiance of a pixel at a first coordinate in the first image is equal to a product of irradiance of a pixel at the first coordinate in a first imaging picture and irradiance of a pixel at the first coordinate in the first basic rendering data, and a pixel value of the pixel at the first coordinate in the first image is determined based on the irradiance of the pixel at the first coordinate.

In an implementation, the system further includes a second electronic device, and the first electronic device and the second electronic device are electronic devices of users participating in a same instance of the first device-side scene. The method further includes: If the first preprocessing data is preprocessing data unrelated to a field of view, the server sends the first preprocessing data to the second electronic device. During implementation of this embodiment of this application, if a plurality of users are in the same instance of the device-side scene, the server may share, with all the users in the instance, the preprocessing data that is in the instance and that is unrelated to the field of view, thereby reducing consumption of computing resources on the cloud side.

In an implementation, the method further includes: The second electronic device performs basic rendering on the first device-side scene to obtain third basic rendering data; the second electronic device obtains a third image based on the third basic rendering data and the first preprocessing data, where the third image has the lighting effect of the first advanced rendering type; and the second electronic device displays the third image.

According to a second aspect, this application provides a device-cloud collaborative rendering method, including: A first electronic device performs basic rendering on a first device-side scene to obtain first basic rendering data, where the first electronic device stores at least one device-side scene, and the first device-side scene is any one of the at least one device-side scene; the first electronic device sends a scene identifier of the first device-side scene and a first advanced rendering type to a server; the first electronic device sends first status data to the server, where the first status data includes data that is in status data of the first device-side scene and that is related to preprocessing of the first advanced rendering type; the first electronic device receives first preprocessing data sent by the server, where the first preprocessing data is obtained by the server by performing preprocessing of the first advanced rendering type on a first cloud-side scene after the server updates the first cloud-side scene based on the first status data, and the server stores the first cloud-side scene transformed from the first device-side scene for the first advanced rendering type; the first electronic device obtains a first image based on the first basic rendering data and the first preprocessing data, where the first image has rendering effect of the first advanced rendering type; and the first electronic device displays the first image.

During implementation of this embodiment of this application, one device-side scene is transformed into one cloud-side scene for each advanced rendering type, and the server stores the cloud-side scene. For a specific advanced rendering type, the electronic device needs to have only a capability of performing basic rendering on a device-side scene, and the server implements preprocessing of advanced rendering on a cloud-side scene corresponding to the device-side scene. After basic rendering data is fused with the preprocessing data of advanced rendering, a finally rendered image presents lighting effect of the specific advanced rendering type. In this way, for various advanced rendering types, a computing power requirement for and load of a device-side GPU can be reduced. The electronic device (for example, a mobile phone or a tablet) can present advanced rendering effect without requiring high-standard hardware performance. In addition, because the server performs only preprocessing of advanced rendering and does not run a full APP, consumption of computing resources on a cloud side is reduced.

In an implementation, the method further includes: The first electronic device updates scene information of the first device-side scene; the first electronic device performs basic rendering on an updated first device-side scene, to obtain second basic rendering data; when a network speed between the first electronic device and the server is less than a preset value, or a network between the first electronic device and the server is disconnected, the first electronic device determines a second image based on second basic rendering data; and the first electronic device displays the second image.

In an implementation, that the first electronic device sends the scene identifier of the first device-side scene and the first advanced rendering type to the server includes: The first electronic device sends a first request to the server, where the first request includes the scene identifier of the first device-side scene and the first advanced rendering type, the first request is used to trigger the server to perform preprocessing preparation, and the preprocessing preparation includes loading the first cloud-side scene and preparing a rendering pipeline for preprocessing of the first advanced rendering type. Before the first electronic device sends the first status data to the server, the method further includes: The first electronic device receives confirmation information sent by the server, where the confirmation information indicates that the preprocessing preparation is completed. That the first electronic device sends the first status data to the server includes: The first electronic device sends the first status data to the server based on the confirmation information.

In an implementation, the status data of the first device-side scene includes a part or all of the following: scene identification information, light source information, role information, camera information, and scene update information.

In an implementation, the server stores a first correspondence among the first device-side scene, the first advanced rendering type, and the first cloud-side scene.

In an implementation, the scene identifier of the first device-side scene and the first advanced rendering type are obtained by the first electronic device from an application package of a first application; and a scene identifier of the first cloud-side scene and the first correspondence among the first device-side scene, the first advanced rendering type, and the first cloud-side scene are deployed on the server during application development of the first application.

In an implementation, the server stores a second cloud-side scene transformed from the first device-side scene for a second advanced rendering type.

In an implementation, that the first electronic device receives the first preprocessing data sent by the server includes: The first electronic device receives the compressed and encoded first preprocessing data sent by the server. Before the first electronic device obtains the first image based on the first basic rendering data and the first preprocessing data, the method further includes: The first electronic device decodes the received first preprocessing data, to obtain the decoded first preprocessing data.

In an implementation, the first advanced rendering type is global illumination. The first preprocessing data includes irradiance that is of each pixel in an imaging picture and that is obtained through preprocessing of global illumination, and the first basic rendering data includes irradiance of each pixel in an imaging picture obtained through basic rendering. Irradiance of a pixel at a first coordinate in the first image is equal to a product of irradiance of a pixel at the first coordinate in the first preprocessing data and irradiance of a pixel at the first coordinate in the first basic rendering data, and a pixel value of the pixel at the first coordinate in the first image is determined based on the irradiance of the pixel at the first coordinate.

According to a third aspect, this application provides a device-cloud collaborative rendering method. The method includes: A server receives a scene identifier of a first device-side scene and a first advanced rendering type that are sent by a first electronic device; the server receives first status data sent by the first electronic device, where the first status data includes data that is in status data of the first device-side scene and that is related to preprocessing of the first advanced rendering type; the server updates a first cloud-side scene based on the first status data, and performs preprocessing of the first advanced rendering type on an updated first cloud-side scene, to obtain first preprocessing data; and the server sends the first preprocessing data to the first electronic device, where the first preprocessing data is used to fuse the first basic rendering data, to obtain a first image, the first image has lighting effect of the first advanced rendering type, and the first basic rendering data is obtained by the first electronic device by performing basic rendering on the first device-side scene.

During implementation of this embodiment of this application, one device-side scene is transformed into one cloud-side scene for each advanced rendering type, and the server stores the cloud-side scene. For a specific advanced rendering type, the electronic device needs to have only a capability of performing basic rendering on a device-side scene, and the server implements preprocessing of advanced rendering on a cloud-side scene corresponding to the device-side scene. After basic rendering data is fused with the preprocessing data of advanced rendering, a finally rendered image presents lighting effect of the specific advanced rendering type. In this way, for various advanced rendering types, a computing power requirement for and load of a device-side GPU can be reduced. The electronic device (for example, a mobile phone or a tablet) can present advanced rendering effect without requiring high-standard hardware performance. In addition, because the server performs only preprocessing of advanced rendering and does not run a full APP, consumption of computing resources on a cloud side is reduced.

In an implementation, that the server receives the scene identifier of the first device-side scene and the first advanced rendering type that are sent by the first electronic device includes: The server receives a first request sent by the first electronic device, where the first request includes the scene identifier of the first device-side scene and the first advanced rendering type. Before the server receives the first status data sent by the first electronic device, the method further includes: The server performs preprocessing preparation based on the first request, where the preprocessing preparation includes loading the first cloud-side scene and preparing a rendering pipeline used for preprocessing of the first advanced rendering type; and the server sends confirmation information to the first electronic device, where the confirmation information indicates that the preprocessing preparation is completed, and the first status data is sent by the first electronic device based on the confirmation information.

In an implementation, the status data of the first device-side scene includes a part or all of the following: scene identification information, light source information, role information, camera information, and scene update information.

In an implementation, the server stores a first correspondence among the first device-side scene, the first advanced rendering type, and the first cloud-side scene. Before the server updates the first cloud-side scene based on the first status data, the method further includes: The server determines, based on the first correspondence, the scene identifier of the first device-side scene, and the first advanced rendering type, that a to-be-rendered cloud-side scene is the first cloud-side scene.

In an implementation, the scene identifier of the first device-side scene and the first advanced rendering type are obtained by the first electronic device from an application package of a first application; and a scene identifier of the first cloud-side scene and the first correspondence among the first device-side scene, the first advanced rendering type, and the first cloud-side scene are deployed on the server during application development of the first application.

In an implementation, the server stores a second cloud-side scene transformed from the first device-side scene for a second advanced rendering type.

In an implementation, that the server sends the first preprocessing data to the first electronic device includes: The server sends the compressed and encoded first preprocessing data to the first electronic device.

In an implementation, the first advanced rendering type is global illumination. The first preprocessing data includes irradiance that is of each pixel in an imaging picture and that is obtained through preprocessing of global illumination, and the first basic rendering data includes irradiance of each pixel in an imaging picture obtained through basic rendering. Irradiance of a pixel at a first coordinate in the first image is equal to a product of irradiance of a pixel at the first coordinate in the first preprocessing data and irradiance of a pixel at the first coordinate in the first basic rendering data, and a pixel value of the pixel at the first coordinate in the first image is determined based on the irradiance of the pixel at the first coordinate.

**In** an implementation, the system further includes a second electronic device, and the first electronic device and the second electronic device are electronic devices of users participating in a same instance of the first device-side scene. The method further includes: If the first preprocessing data is preprocessing data unrelated to a field of view, the server sends the first preprocessing data to the second electronic device.

According to a fourth aspect, an embodiment of this application provides an electronic device. The electronic device includes a processor and a memory. The memory is coupled to the processor. The memory is configured to store computer program code. The computer program code includes computer instructions. When the processor reads the computer instructions from the memory, the electronic device is enabled to perform the device-cloud collaborative image enhancement method according to the first aspect.

According to a fifth aspect, an embodiment of this application provides a server. The server includes a processor and a memory. The memory is coupled to the processor. The memory is configured to store computer program code. The computer program code includes computer instructions. When the processor reads the computer instructions from the memory, the server is enabled to perform the device-cloud collaborative rendering method according to the second aspect.

According to a sixth aspect, an embodiment of this application provides a computer storage medium, including computer instructions. When the computer instructions are run on an electronic device, a communication apparatus is enabled to perform the device-cloud collaborative rendering method according to any possible implementation of any one of the foregoing aspects.

According to a seventh aspect, an embodiment of this application provides a computer program product. When the computer program product runs on a computer, the computer is enabled to perform the device-cloud collaborative rendering method according to any possible implementation of any one of the foregoing aspects.

### BRIEF DESCRIPTION OF DRAWINGS

FIG. 1 is a diagram of a system architecture of a communication system according to an embodiment of this application;
FIG. 2A is a diagram of a system architecture of a rendering system according to an embodiment of this application;
FIG. 2B is a diagram of a system architecture of another rendering system according to an embodiment of this application;
FIG. 3A shows rendering effect without GI according to an embodiment of this application;
FIG. 3B shows rendering effect with GI according to an embodiment of this application;
FIG. 3C shows rendering effect without reflection according to an embodiment of this application;
FIG. 3D shows rendering effect with reflection according to an embodiment of this application;
FIG. 4 is a diagram of a data flow according to an embodiment of this application;
FIG. 5A and FIG. 5B are a diagram of a system architecture of another rendering system according to an embodiment of this application;
FIG. 6A to FIG. 6C are a schematic flowchart of a device-cloud collaborative rendering method in a development phase according to an embodiment of this application;
FIG. 7A and FIG. 7B are a diagram of device-cloud collaborative rendering according to an embodiment of this application;
FIG. 8A and FIG. 8B are a schematic flowchart of a device-cloud collaborative rendering method in a running phase according to an embodiment of this application;
FIG. 9A and FIG. 9B are a diagram of a system architecture of another rendering system according to an embodiment of this application;
FIG. 10 is a diagram of a structure of a mobile device according to an embodiment of this application; and
FIG. 11 is a diagram of a structure of a server according to an embodiment of this application.

### DESCRIPTION OF EMBODIMENTS

The technical solutions according to embodiments of this application are clearly and completely described below with reference to the accompanying drawings. In descriptions of embodiments of this application, unless otherwise stated, "/" represents "or". For example, A/B may represent A or B. In this specification, "and/or" merely describes an association relationship between associated objects and represents that three relationships may exist. For example, A and/or B may represent the following three cases: Only A exists, both A and B exist, and only B exists. In addition, in the descriptions of embodiments of this application, "a plurality of" means two or more than two.

The terms "first" and "second" mentioned below are merely intended for a purpose of description, and shall not be understood as an indication or implication of relative importance or implicit indication of a quantity of indicated technical features. Therefore, a feature limited by "first" and "second" may explicitly or implicitly include one or more features. In the descriptions of embodiments of this application, unless otherwise stated, "a plurality of" means two or more.

The term "user interface (user interface, UI)" in the following embodiments of this application is a medium interface for interaction and information exchange between an application or an operating system and a user, and implements conversion between an internal form of information and a form acceptable to the user. The user interface is source code written in a specific computer language like Java or an extensible markup language (extensible markup language, XML). The interface source code is parsed and rendered on an electronic device, and is finally presented as content that can be identified by the user. The user interface is usually represented in a form of graphical user interface (graphical user interface, GUI), and is a user interface that is related to a computer operation and that is displayed in a graphical manner. The user interface may be a visual interface element, for example, a text, an icon, a button, a menu, a tab, a text box, a dialog box, a status bar, a navigation bar, or a widget that is displayed on a display of an electronic device.

The 3D rendering technology is a process of projecting a constructed model in a 3D scene into a two-dimensional digital image based on information such as a specified viewpoint, light source, and material.

In a conventional 3D rendering technology, for example, a rasterization technology, an object model in a 3D scene is segmented by using a triangle, three-dimensional coordinates of a vertex of the triangle are transformed into two-dimensional coordinates on an image through geometric transformation, and finally a texture is filled in the triangle on the image. In this way, the 3D object model is mapped to a two-dimensional screen to implement image rendering. According to the technology, it is usually difficult to truly restore lighting effect like ray reflection, object shadow, and refraction in the 3D scene. Consequently, it is difficult to present realistic 3D visual experience on a rendered image.

In comparison with the conventional 3D rendering technology, an image rendered by using a ray tracing technology provides more realistic 3D visual experience. In the ray tracing technology, a ray propagation process in a 3D scene is simulated through reflection, refraction, shadowing, scattering, and the like, a color and a brightness value of each pixel are calculated, and lighting effect of a rendered two-dimensional image conforms to a real-world physical law. In this way, a more realistic 3D virtual scene is simulated on the electronic device.

In the ray tracing technology, there is a need to simulate a large quantity of ray paths to obtain visual effect that conforms to the real world. This means that GPU computing power required by the light ray tracing technology increases explosively with a quantity of simulated rays. NVIDIA implemented a real-time hardware ray tracing technology of a PC-level GPU for the first time on the RTX 20 series graphics cards in 2018. However, due to limitations on power consumption and computing power, device-side GPUs of most mobile devices cannot implement the hardware ray tracing technology, and there is more research to be done on large-scale commercial promotion. In the device-cloud collaborative rendering method provided in embodiments of this application, a mobile device collaborates with a PC-level GPU on a cloud side to render the 3D scene, to present, on the mobile device, rendering effect that can be achieved by using the ray tracing technology. This reduces a computing power requirement for and load of a device-side GPU of the mobile device.

The following describes a communication system to which the device-cloud collaborative rendering method provided in embodiments of this application is applied.

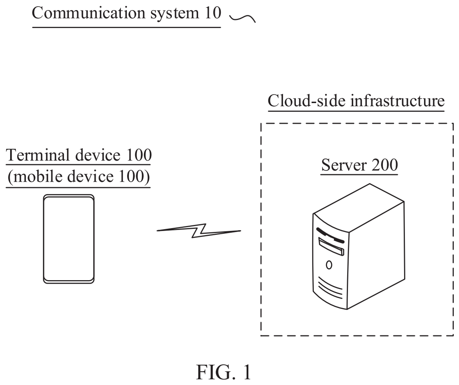

FIG. 1 shows an example of a system architecture of a communication system 10 according to an embodiment of this application. As shown in FIG. 1, the communication system 10 includes a terminal device 100 and a cloud-side infrastructure. The cloud-side infrastructure includes a server 200. The terminal device 100 may communicate with the cloud-side infrastructure through a communication network, and the cloud-side infrastructure may provide a rendering service of a 3D application (Application, APP) for the terminal device 100.

The 3D application is an application that provides 3D picture display effect, and the 3D picture is a two-dimensional image obtained through rendering based on a model in a 3D scene. For example, the 3D application is a 3D game APP, a 3D modeling APP, a 3D navigation APP, a 3D home decoration APP, or the like. Subsequently, a game APP is used as an example for description in embodiments.

The terminal device 100 may be a mobile phone, a tablet computer, a desktop computer, a laptop computer, a handheld computer, a notebook computer, an ultra-mobile personal computer (ultra-mobile personal computer, UMPC), or a netbook, or may be a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device (for example, a smart band), a vehicle-mounted device, a smart home device (for example, a smart television, a smart screen, or a large-screen device), and/or a smart city device. A specific type of the terminal device 100 is not specifically limited in embodiments of this application. The terminal device 100 may also be referred to as a device side or an electronic device.

The terminal device 100 may be a mobile device or a non-mobile device. The mobile device is usually small in size, and therefore GPU computing power is more limited, and beneficial effect achieved by using the device-cloud collaborative rendering solution provided in this application is more significant. Subsequently, an example in which the terminal device 100 is a mobile device 100 is used for description in embodiments.

The server 200 may be a server, a server cluster including a plurality of servers, or a cloud-side computing center. The server 200 in embodiments of this application may also be referred to as a cloud server, a cloud side, or a cloud end. In addition to the server 200, the cloud-side infrastructure may further include more other devices. This is not specifically limited herein.

The communication network may include a local area network (local area network, LAN) and/or a wide area network (wide area network, WAN). The communication network may be implemented by using any known network communication protocol. The network communication protocol may be various wired or wireless communication protocols, such as Ethernet, a universal serial bus (universal serial bus, USB), firewire (FIREWIRE), a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), Bluetooth, wireless fidelity (wireless fidelity, Wi-Fi), NFC, voice over Internet protocol (voice over Internet protocol, VoIP), a communication protocol supporting a network slice architecture, or any other suitable communication protocol.

It should be understood that FIG. 1 is merely a diagram of the system structure of the communication system provided in embodiments of this application, and does not constitute a specific limitation on the communication system 10. The communication system 10 may include more or fewer devices than those shown in the figure, for example, may further include a wireless relay device and a wireless backhaul device (not shown in FIG. 1). This is not limited herein.

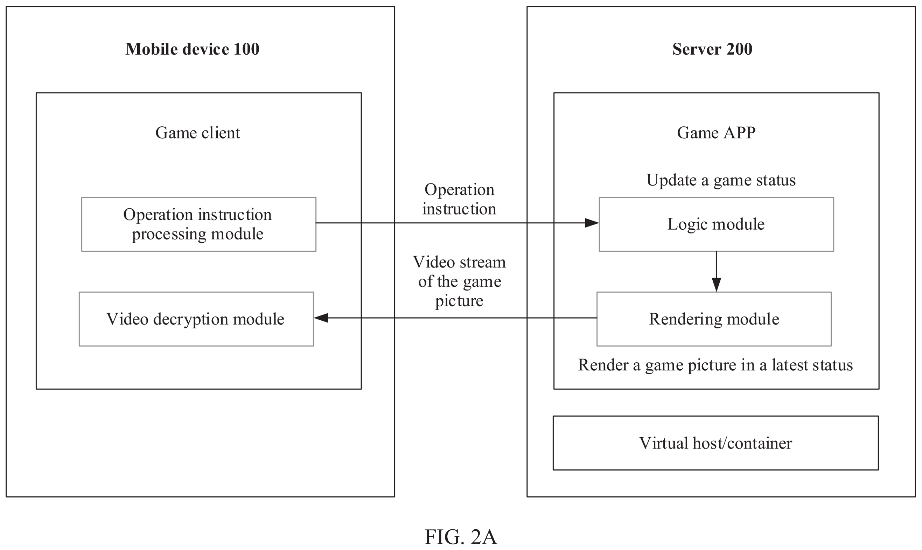

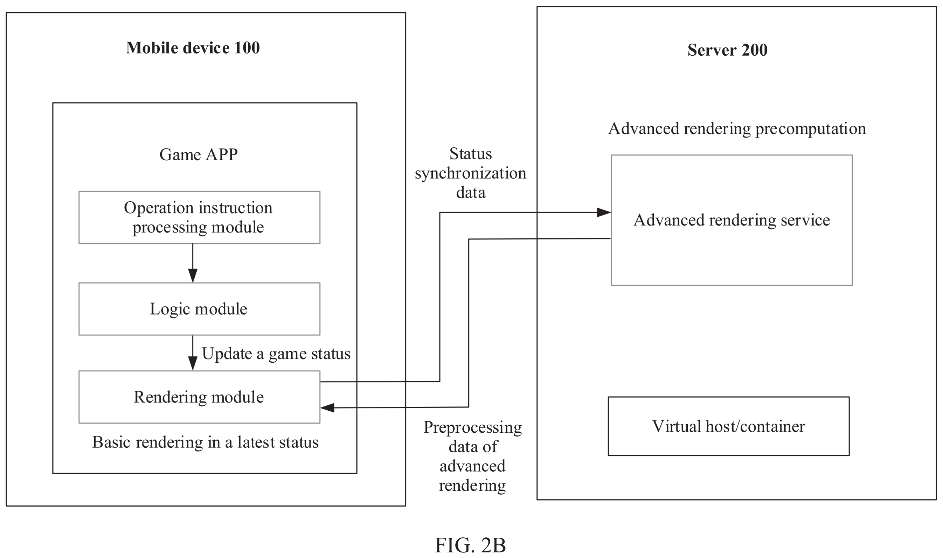

In a device-cloud collaborative rendering method (namely, a method 1) according to an embodiment of this application, all rendering work of the game APP is transferred to a cloud side, and rendering effect of a mobile device is improved by using GPU computing power on the cloud side. For example, as shown in FIG. 2A, in the method, there is no need to install a game on the mobile device 100, and only a game client of the game APP needs to be installed. The game client includes an operation instruction processing module and a video decoding module. The server 200 can run the game APP. The game APP includes a rendering module and a logic module. All rendering work of the game APP is executed in a virtual host/container of the server 200.

The operation instruction processing module in the mobile device 100 is responsible for collecting operation instruction information (for example, leftward and rightward movement, view switching, and tapping) of a user, and uploading an operation instruction to the game APP on the cloud side. The game APP on the cloud side sends the received operation instruction information to the logic module. After updating a game status based on the operation instruction information, the logic module triggers the rendering module to render a game scene in a latest status. The game APP on the cloud side transmits a rendered game picture to the game client in the mobile device 100 in a form of video stream. The video decoding module in the mobile device 100 decodes the video stream to obtain the game picture, and triggers the mobile device 100 to display the game picture. Optionally, based on powerful computing power of a PC-level GPU on the cloud side, the rendering module on the cloud side may render, by using a ray tracing technology, a game picture corresponding to a game scene in a latest status.

Implementation of the foregoing device-cloud collaborative rendering method can reduce a computing power requirement for and load of a device-side GPU. However, the rendering method further has the following problems. (1) All game rendering tasks are executed on the cloud side, resulting in high computing costs on the cloud side; and a device side is used only as a video player, wasting GPU resources on the device side. (2) A rendering result on the cloud side cannot be shared among a plurality of users, further increasing the computing costs on the cloud side. (3) Transmission bandwidth costs are high. A rendered game picture is transmitted in a form of video stream. In a case of 1080p@60 fps, a transmission bandwidth is about 10 Mbps. As a result, an egress bandwidth of a cloud server and downlink bandwidth costs of a user are high. (4) User experience is poor when a network is weak. A mobile user often encounters a poor network condition. When the network is poor, an operation response delay of the user is high, affecting game operation experience.

In another device-cloud collaborative rendering method (namely, a method 2) according to an embodiment of this application, a device side performs basic rendering on a game scene, and a cloud side performs preprocessing of advanced rendering on the game scene; and the device side fuses basic rendering data and preprocessing data of advanced rendering, to obtain a game picture of the game scene after advanced rendering. For example, as shown in FIG. 2B, in the method, a game APP may be installed on the mobile device 100. The game APP includes an operation instruction processing module, a rendering module, and a logic module. The server 200 includes an advanced rendering service.

The operation instruction processing module in the mobile device 100 is responsible for collecting operation instruction information of a user, and sending an operation instruction to the logic module in the mobile device 100. After updating a game status based on the operation instruction information, the logic module triggers the rendering module in the mobile device 100 to perform basic rendering on a game scene 1 (namely, a device-side scene 1) in a latest status, and sends status synchronization data to the server 200. The advanced rendering service in the server 200 updates, based on the status synchronization data, a cloud-side scene 1 corresponding to the device-side scene 1, performs preprocessing of advanced rendering based on the updated cloud-side scene 1, and sends preprocessing data to the mobile device 100. After the rendering module in the mobile device 100 fuses basic rendering data and preprocessing data of advanced rendering, to obtain a finally rendered game picture. The game picture has advanced rendering effect, and can achieve rendering effect that can be implemented by using a ray tracing technology. If there are a plurality of players in an instance of a same game scene, the server 200 may share, with all the players in the instance, preprocessing data that is of advanced rendering and that is unrelated to a field of view in the instance.

This embodiment of this application can achieve the following beneficial effect: The device side performs only basic rendering and fusion, and there is no need to perform ray tracing of advanced rendering, so that a computing power requirement for and load of the device-side GPU can be reduced; and a mobile device (for example, a mobile phone or a tablet) of a game player does not need to have high hardware performance, and can also present rendering effect that can be achieved by using the ray tracing technology, to implement smooth playing of a 3D game. In addition, because the cloud side performs only preprocessing of advanced rendering and does not run the full game APP, consumption of computing resources on the cloud side is reduced; and the advanced rendering service on the cloud side can share the preprocessing data of advanced rendering in a same instance with the device-side client corresponding to a plurality of game users in the same instance, so that consumption of computing resources on the cloud side is further reduced. Data transmitted from the cloud side to the device side may be preprocessing data of advanced rendering after compression, and requires a lower transmission bandwidth than a video stream (for example, 720p/1080p@30 fps/60 fps and 1080p@30 fps video streams) for transmission. In comparison with the method 1, the required transmission bandwidth is lower, and therefore, a transmission delay is lower when a network condition is poor. This reduces impact of a weak network on user operation experience. In addition, when the network condition is poor, the device side can still perform basic rendering, and ensure normal running of the game APP, to ensure basic operation experience of the user.

The following describes the method 2 in detail. First, technical concepts related to the device-cloud collaborative rendering method are described.

A 3D scene (namely, a virtual scene) may be a virtual three-dimensional scene environment (for example, a city, a park, a forest, a street, or mountains and rivers) generated by using a computer. The 3D scene can provide a multimedia virtual world. A user may control an operable virtual object in the virtual scene by operating a device or an interface, and observe the virtual object like an object, an animal, a person, or a landscape in the virtual scene from a perspective of the virtual object. The mobile device 100 may construct a 3D object model based on each virtual object, and then construct an entire scene model. For example, one scene in a game APP may include one or more virtual scenes of one or more game levels, or may include one or more specific areas (for example, a house, a room, or a garden) in one game level.

Basic rendering and advanced rendering are relative concepts. Basic rendering requires low GPU computing power, including a rendering task that can be independently completed by relying on GPU computing power of the mobile device 100. A game picture that is of a game scene and that is generated based on basic rendering can be used to ensure normal running of a game APP and normal interaction of a user operation. When a network of a communication network between the mobile device 100 and the server 200 is poor or disconnected, and preprocessing data of advanced rendering fed back by the cloud side is not obtained, the game APP on the mobile device 100 may directly display the game picture after basic rendering, so that a user can perform a normal operation and view the game APP.

In this embodiment of this application, a rendered image generated after basic rendering is completed may be referred to as a basically rendered image, and basic rendering data generated after basic rendering may be intermediate data (for example, irradiance of each pixel obtained through basic rendering) in a process of generating the basically rendered image, or may be image data of the basically rendered image. GPU computing power required by a rendering technology used for basic rendering can be provided by the mobile device 100. The rendering technology is not specifically limited in embodiments of this application. In some embodiments, basic rendering is performed on a to-be-rendered scene by using a rasterization technology.

Advanced rendering requires high GPU computing power, including a rendering task that can be executed only by relying on GPU computing power on the cloud side. An advanced rendering task is usually prone to be decoupled from a basic rendering task. Preprocessing data of a specific advanced rendering type is used to obtain lighting effect of the specific advanced rendering type in a to-be-rendered picture. Different advanced rendering types may correspond to different preprocessing data, and correspondingly, fused basic rendering data may also be different. For example, the specific advanced rendering type is GI rendering, preprocessing data of GI includes irradiance of each pixel after GI rendering, and basic rendering data includes irradiance of each pixel after basic rendering. Alternatively, the specific advanced rendering type is reflection rendering, preprocessing data of reflection rendering includes a cubemap (cubemap) captured by a reflection probe, and basic rendering data includes a color of each pixel after basic rendering.

In some embodiments, advanced rendering is a rendering task related to an illumination feature, for example, rendering of illumination features such as global illumination (Global Illumination, GI), ambient occlusion (Ambient Occlusion, AO), soft shadow (Soft Shadow), reflection, refraction, and caustics, and may further include rendering of another feature that is intensive in cloud-side computing and that can be fused with device-side basic rendering.

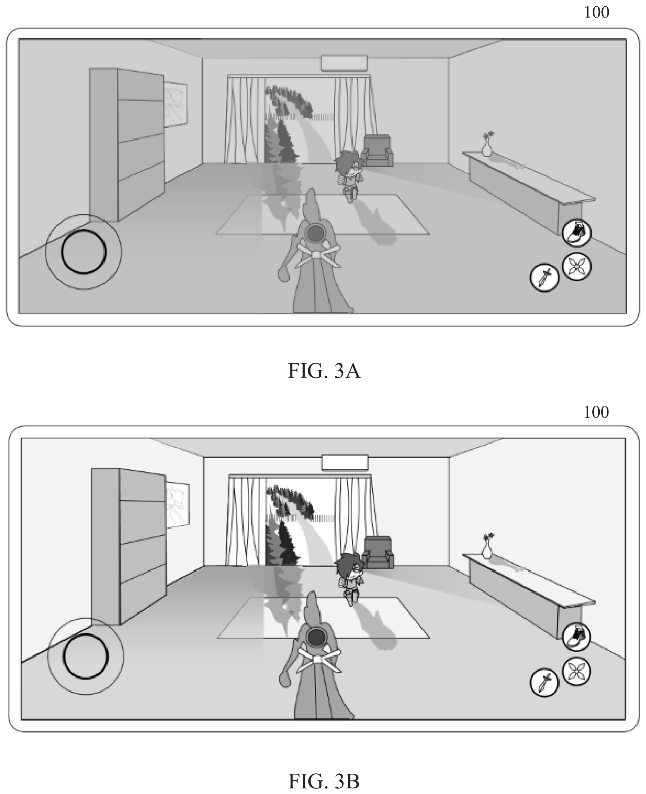

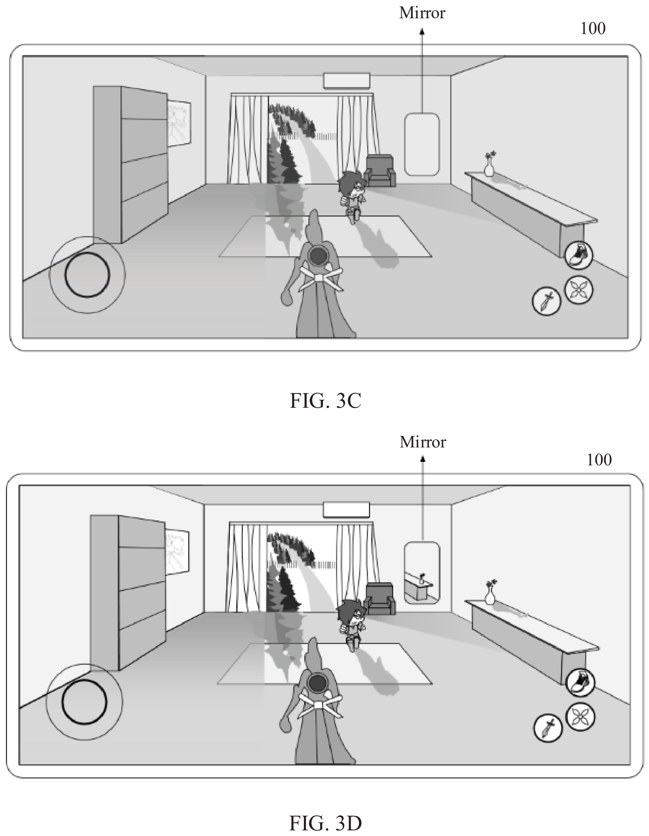

Refraction refers to a phenomenon in which ray changes a propagation direction on a boundary plane when propagated to different substances, and then returns to an original substance. GI is an illumination feature formed by direct illumination and indirect illumination. Global illumination is more consistent with real illumination in reality. Direct illumination is an illumination phenomenon in which a ray emitted by a light source is directly irradiated onto an object in a scene. Indirect illumination is an illumination phenomenon in which a ray emitted by a light source is reflected by a surface of an object in a scene, and then the generated ray is formed in the scene. For example, FIG. 3A and FIG. 3B show rendering effect of a same game picture displayed by a game APP with GI and without GI. As shown in FIG. 3A, when there is no GI, the game picture can also be run and displayed normally, but picture effect is dim and lacks lighting details of indirect illumination, for example, lacks lighting details formed by reflection of a wall on an object. As shown in FIG. 3B, when there is GI, picture effect is brighter and more realistic and fuller. For example, FIG. 3C and FIG. 3D show rendering effect of a same game picture with reflection and without reflection. As shown in FIG. 3C, when there is no reflection, the game picture can also be run and displayed normally, but picture effect lacks reflection lighting effect, for example, mirror projection content is not displayed in a mirror in the picture. As shown in FIG. 3D, when there is reflection, mirror projection content is displayed in the mirror in the picture.

In some embodiments, the basic rendering task of the game APP includes a minimum set of rendering tasks that ensure normal running of the game picture. The advanced rendering task of the game APP includes a rendering task other than the basic rendering task of the game APP. In some embodiments, the advanced rendering task other than the minimum set may alternatively include a rendering task that can be implemented only by relying on computing power of the device-side GPU. The rendering task is transferred to the cloud side for execution, so that a computing power requirement for and load of the device-side GPU can be reduced.

In some embodiments, the game APP may determine, based on a real-time network condition, an advanced rendering type that can be currently used for device-cloud collaborative rendering. In this embodiment of this application, the server 200 needs to feed back preprocessing data of advanced rendering to the mobile device 100. Types and amounts of preprocessing data of different advanced rendering types may be different. For example, in comparison with reflection, an amount of preprocessing data for GI is lower. When a network condition is average (for example, a round-trip delay is 50 ms to 100 ms, and a transmission bandwidth is 10 Mbps), there are fewer advanced rendering types that conform to device-cloud collaborative rendering on a premise that a maximum transmission delay of preprocessing data that meets a normal operation of a user is ensured. When a network condition is great (for example, RTT is 10 ms to 20 ms, and a bandwidth is 100 Mbps), there are more advanced rendering types that conform to device-cloud collaborative rendering on a premise that a maximum delay of a user operation is ensured.

In this embodiment of this application, a developer may determine a basic rendering task and an advanced rendering task of an application (for example, the game APP) based on an actual application requirement and a GPU capability of the mobile device. This is not specifically limited herein.

For the foregoing device-cloud collaborative rendering method, embodiments of this application specifically provide two implementations.

In an implementation solution 1, the device side independently downloads a device-cloud collaboration plug-in SDK for a device-side 3D engine. The plug-in is used to implement the device-cloud collaborative rendering method. In an implementation solution 2, a native device-side 3D engine supports the device-cloud collaborative rendering method. The following separately describes the two implementation solutions in detail.

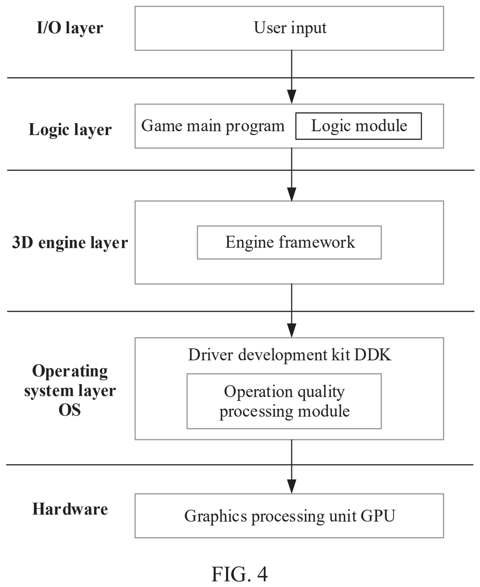

For example, FIG. 4 is a data flow diagram of a mobile device 100 in the implementation solution 1. As shown in FIG. 4, the mobile device 100 includes an input/output (input/output, IO) layer, a logic layer, a 3D engine layer, an operating system (OS) layer, and a hardware layer. The IO layer may obtain a user input of a game APP from an operation quality processing module at the OS layer, and send the user input to the logic layer. The logic layer runs logic code (namely, the logic module) of the game APP, and the logic layer updates a game status based on the user input. The logic layer indicates the 3D engine layer to render a game picture in a latest game status. The 3D engine layer invokes a GPU through the OS layer, to render the game picture.

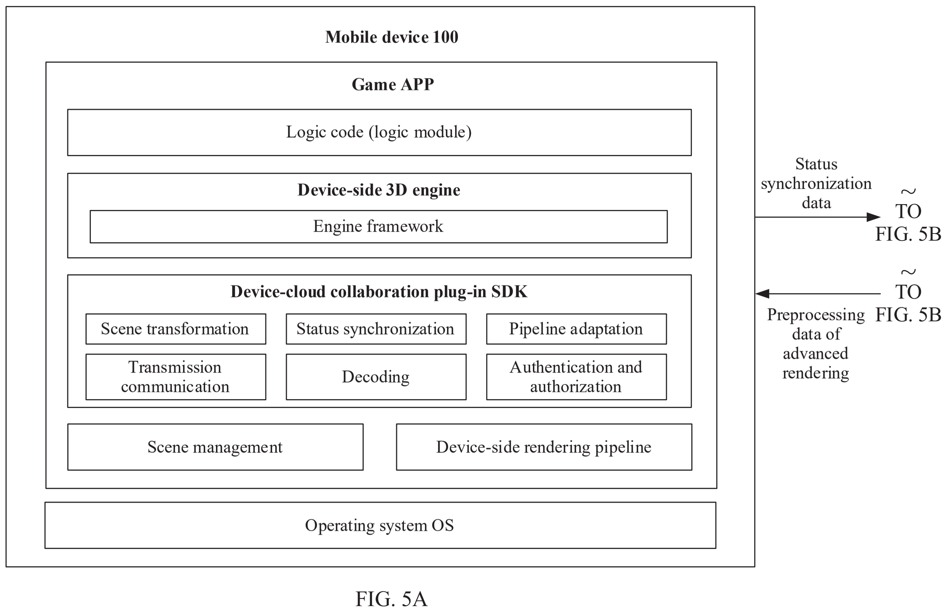

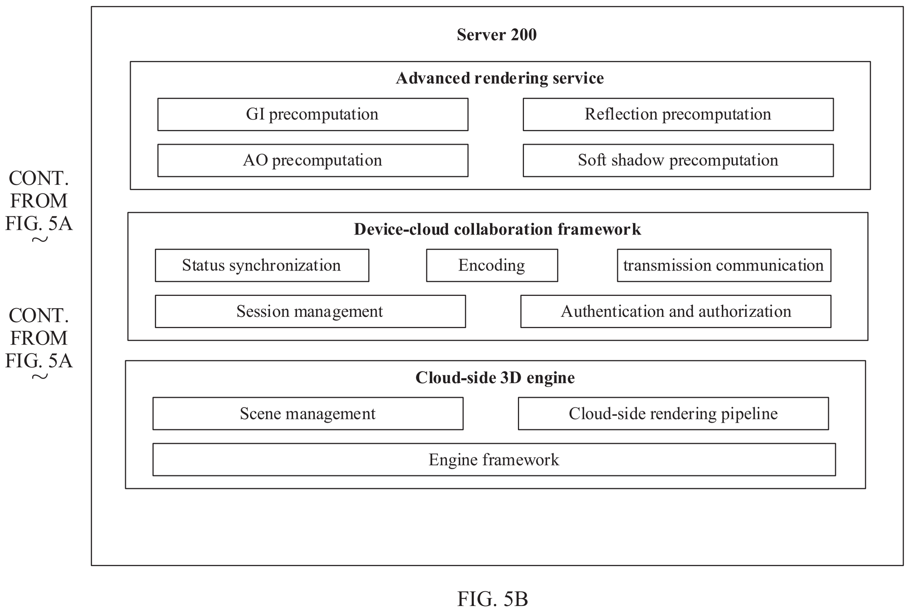

For example, FIG. 5A and FIG. 5B are a diagram of a system architecture of a device-cloud collaborative rendering system in the implementation solution 1. As shown in FIG. 5A and FIG. 5B, the rendering system includes a mobile device 100 and a server 200. A game APP in the mobile device 100 mainly includes the following modules: logic code, a device-side 3D engine, and a device-cloud collaboration plug-in SDK. The server 200 mainly includes the following modules: an advanced rendering service, a device-cloud collaboration framework, and a cloud-side 3D engine.

The logic code includes logic code for implementing game logic of the game APP.

The device-side 3D engine includes main modules such as an engine framework, scene management, and a rendering pipeline. The engine framework is configured to provide related capabilities such as game logic parsing, model parsing, and animation parsing for the game APP on a device side. Scene management is used for managing scene information of one or more game scenes (namely, device-side scenes) constructed by the game APP. The rendering pipeline is a process of transforming a three-dimensional scene model into an output in screen pixel space, and includes the following functions: transforming 3D coordinates of an object into 2D coordinates in the screen pixel space, and shading each pixel on a screen.

The device-side 3D engine has two modes: a development state and a running state. The device-side 3D engine provides an integrated development environment (Integrated Development Environment, IDE) for a developer in the development state, allowing the developer to develop logic code of the game APP and rendering effect of a 3D scene. After development is completed, developed related files may be packaged into an application package of the game APP that can run on a mobile device, for example, an Android application package (Android application package, APK). The device-side 3D engine provides Runtime (runtime) for the game APP in the running state. The Runtime (runtime) usually has a cross-platform capability, and can support the game APP to run on mobile devices with different operating systems such as Harmony, Android, and iOS. In this embodiment of this application, when running on the Runtime, the game APP may invoke the rendering pipeline to perform basic rendering on a device-side scene to be rendered, to generate basic rendering data; may further invoke the device-cloud collaboration plug-in SDK to request the server 200 to perform preprocessing of advanced rendering; and may fuse the basic rendering data and preprocessing data of advanced rendering, to obtain, based on fused data, an advanced rendering image that can be displayed.

The device-cloud collaboration plug-in SDK encapsulates key capabilities of device-cloud collaborative rendering, and enables, based on a plug-in mechanism provided by the device-side 3D engine, the third-party device-side 3D engine to have a device-cloud collaborative rendering capability. The device-cloud collaboration plug-in SDK includes some or all of the following sub-functions: scene transformation, status synchronization, transmission communication, decoding, pipeline adaptation, and authentication and authorization. In this embodiment of this application, device-cloud collaborative rendering is implemented by providing the device-cloud collaborative plug-in SDK for the third-party 3D engine, to avoid an invasive modification to the third-party 3D engine.

Scene transformation is used to transform, into a scene (namely, a cloud-side scene) required for preprocessing of advanced rendering on a cloud side, a to-be-rendered scene (namely, the device-side scene) on which the device-side 3D engine needs to perform device-cloud collaborative rendering. Scene information of the cloud-side scene may be consistent with or inconsistent with scene information of the device-side scene.

Device-side status synchronization is used to synchronize, to the cloud side, status data that affects cloud-side preprocessing and a preprocessing result distribution strategy (referred to as status synchronization data for short below). For example, the status synchronization data includes some or all of the following: scene identification information (for example, a game identifier (identifier, ID), a level ID, a scene ID, or an instance ID) of the to-be-rendered scene, light source information (for example, a type, a location, a posture, and brightness of a light source, and a quantity of light sources), role information (for example, a location, a posture, animation, and a skill of a virtual role, and a quantity of virtual roles), camera information (for example, a location, a posture, and a field of view (FOV) of a camera), and scene update information (for example, information related to object movement, object animation, and destruction). The field of view of the camera (namely, a field of view of a game player) determines a final image content after the 3D scene is rendered, and also affects contribution of the light source in the scene to imaging.

Device-side transmission communication is used to upload the device-side state synchronization data to the cloud side, and receive the preprocessing data of advanced rendering delivered by the cloud side.

Device-side decoding is used to decode, into preprocessing data that can be consumed by the device-side rendering pipeline, the compressed and encoded preprocessing data delivered by the cloud side.

Device-side pipeline adaptation is used to add a rendering capability of the decoded preprocessing data to the original device-side rendering pipeline based on an extension mechanism of the rendering pipeline in the device-side 3D engine, that is, fuse the basic rendering data and the preprocessing data to obtain a capability of advanced rendering effect.

Device-side authentication and authorization are responsible for authentication and authorization between the device-cloud collaboration plug-in SDK on the device side and the advanced rendering service on the cloud device.

The cloud-side 3D engine includes functional modules such as scene management, a rendering pipeline, and an engine framework, and provides a capability base for a device-cloud collaboration framework and the advanced rendering service.

The device-cloud collaboration framework includes some or all of the following sub-functions: status synchronization, transmission communication, decoding, session management, authentication and authorization, and the like.

Cloud-side status synchronization is used to receive the status synchronization data that is of the device-side scene (for example, a device-side scene 1) and that is sent by the device side, and update the scene information of the corresponding cloud-side scene (for example, a cloud-side scene 1 corresponding to the device-side scene 1) in the scene management module in the cloud-side 3D engine.

Cloud-side encoding is used to compress and encode the preprocessing data of the advanced rendering service to reduce an amount of data to be transmitted.

Cloud-side transmission communication is used to receive the status synchronization data transmitted by the device side, and send the compressed and encoded preprocessing data to the device side.

Session management is used to allocate, to the corresponding advanced rendering service, a client connected to the device side, for example, allocates the client based on information such as a game ID, a level/scene ID, and an instance ID that are uploaded by the device side. It can be understood that the server 200 may separately establish sessions and advanced rendering services corresponding to the sessions with a plurality of device-side clients, to provide the advanced rendering services for the plurality of clients at the same time.

Cloud-side authentication and authorization are used for authentication and authorization between the advanced rendering service on the cloud side and the device-cloud collaboration plug-in SDK on the device side.

The advanced rendering service provides an advanced rendering service based on the cloud 3D engine and the device-cloud collaboration framework, in other words, preprocessing of advanced rendering, for example, advanced rendering services such as GI preprocessing, AO preprocessing, reflection preprocessing, and soft shadow preprocessing.

In some embodiments, to save cloud-side computing power and facilitate development and debugging, in a development phase of the game APP, the modules in the mobile device 100 and the modules in the server 200 in the rendering system shown in FIG. 5A and FIG. 5B may be simulated, developed, and tested on a same device. In other words, the cloud-side 3D engine and the device-side 3D engine in the development state may alternatively be disposed on a same device. The device may be a mobile device or a cloud-side server. This is not specifically limited herein. Preferably, the device may be a mobile device.

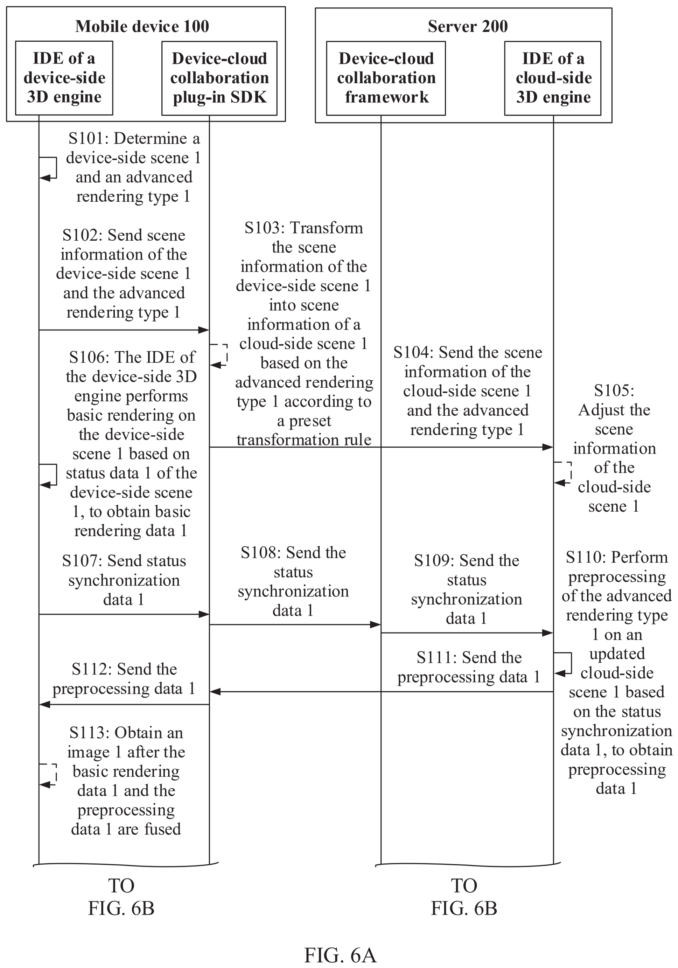

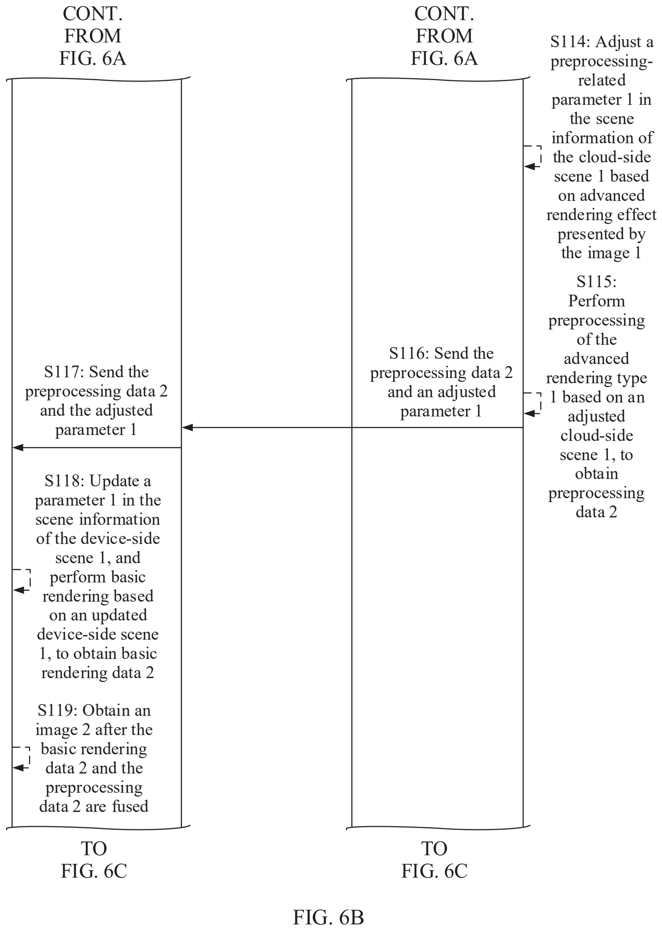

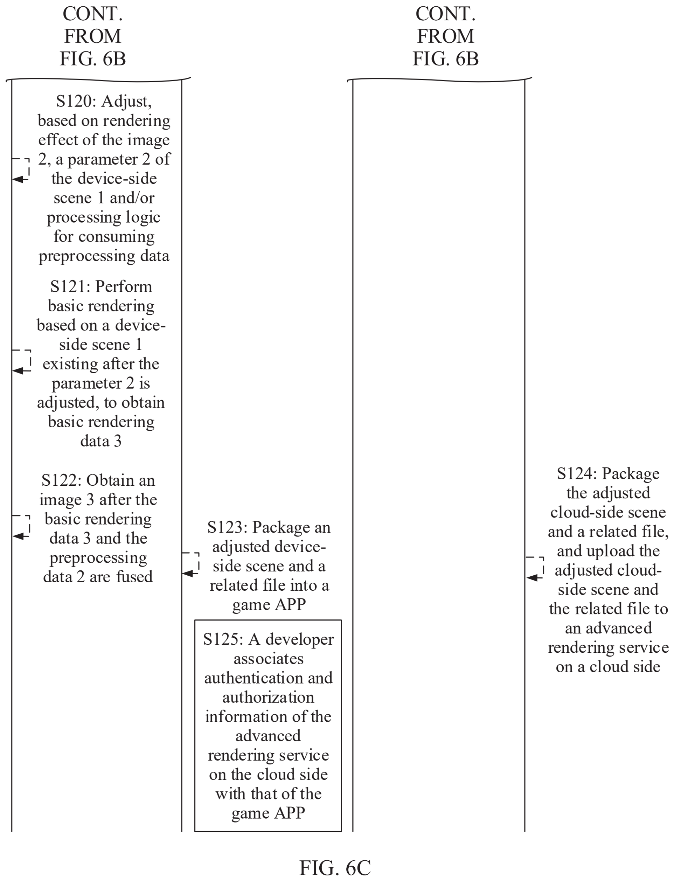

Based on the foregoing embodiments, an embodiment of this application provides a device-cloud collaborative rendering method. The method is applied to a device-cloud collaborative rendering system. The system includes a game APP of a mobile device 100. The game APP includes a device-side 3D engine and a device-cloud collaboration plug-in SDK. FIG. 6A to FIG. 6C are a method flowchart of a device-cloud collaborative rendering method in a development phase. A procedure of the method includes a part or all of steps S101 to S125.

S101: An IDE of a device-side 3D engine determines a device-side scene 1 and an advanced rendering type 1 that are used for device-cloud collaborative rendering.

In this embodiment of this application, in an APP development phase, the device-side 3D engine in a development state provides the IDE for a developer. The developer selects, in the IDE, a device-side scene (for example, the device-side scene 1) used for device-cloud collaborative rendering and an advanced rendering type corresponding to the device-side scene. For a game APP, the device-side scene may be one or more levels in a game, or may be a part of space (for example, an interior of a building) in a level. The advanced rendering type is a rendering type corresponding to the advanced rendering task described in the foregoing embodiments. For example, the advanced rendering type includes GI, AO, soft shadow, reflection, refraction, caustics, and other types. Another advanced rendering type may be further included in embodiments of this application. This is not specifically limited herein. Subsequently, GI and reflection are mainly used as examples for description in embodiments.

S102: The device-side 3D engine sends scene information of the device-side scene 1 and the advanced rendering type 1 to a device-cloud collaboration plug-in SDK.

In some embodiments, the scene information of the device-side scene includes a description of a 3D object model (for example, a building, a person, or another object) (for example, information such as a name, a geometry, a texture, a material, roughness, and transparency of the object model) in the scene, and may further include a description of information such as a background environment, light source information, scene identification information, role information, and camera information in the scene. A geometric structure of the 3D object model may be represented in a plurality of manners, for example, may be represented by a triangular facet mesh (Mesh). To be specific, a surface of a 3D object is approximately represented by a plurality of meshes. Mesh information of one mesh may include useful attributes, such as vertex coordinates, a normal, texture coordinates, and a triangle drawing sequence, and functions of the mesh.

In embodiments of this application, for some advanced rendering types, illumination information of each point in the scene may be obtained by deploying a probe (Probe) in the scene. In an implementation, a device side may deploy, in a 3D scene according to a preset deployment rule (for example, uniform distribution in a preset spatial range of the 3D scene based on a preset density), probes for implementing a specific advanced rendering type (for example, GI). Each probe may capture, store, and update illumination information received at a location of the probe. When a shading point (shading point) (for example, a shading point 1) in the 3D scene needs to be shaded, a probe adjacent to the shading point 1 may be queried, and the shading point 1 is shaded based on illumination information at a location of the adjacent probe, so that a pixel corresponding to the shading point 1 in an imaging picture may be rendered.

In some embodiments, the scene information of the device-side scene 1 may further include related information of a probe deployed in the scene and required for advanced rendering, for example, information such as a probe deployment rule, a deployment spatial range, a quantity of probes, a historical fusion coefficient, and a deviation value. The related information of the probe is not specifically limited in embodiments of this application. In embodiments of this application, a probe deployed for implementing GI may be referred to as a GI probe, and a probe deployed for implementing reflection may be referred to as a reflection probe.

S103: The device-cloud collaboration plug-in SDK transforms the scene information of the device-side scene 1 into scene information of a cloud-side scene 1 based on the advanced rendering type 1 according to a preset transformation rule.

In embodiments of this application, information content of the scene information of the device-side scene 1 may be consistent or inconsistent with that of the cloud-side scene 1.

In some embodiments, after obtaining the scene information of the device-side scene 1, the cloud collaboration plug-in SDK may simplify the information content of the scene information of the device-side scene 1 according to the preset transformation rule, and retain only scene information required for preprocessing of the advanced rendering type 1. Simplified scene information indicates the cloud-side scene 1 corresponding to the device-side scene 1.

For example, in an implementation, if the developer selects advanced rendering types such as GI, AO, and soft shadow, the scene information of the transformed cloud-side scene 1 needs to retain only attribute information (for example, mesh information and color information) of an object surface of each 3D object model in the device-side scene 1. Precision of mesh information in the scene information of the cloud-side scene 1 may be even lower than precision of the mesh information of each model in the scene information of the device-side scene 1. Reducing the precision of the mesh information helps reduce complexity of subsequent preprocessing of advanced rendering. If advanced rendering types such as reflection and refraction are selected, the scene information of the transformed cloud-side scene 1 and the scene information of the device-side scene 1 need to be more similar to each other, for example, the information content of the scene information of the cloud-side scene 1 is consistent with that of the device-side scene 1.

In some embodiments, a data format of the scene information of the device-side scene 1 may be consistent or inconsistent with that of the cloud-side scene 1. The data format of the scene information indicates a type of information included in the scene information, a representation manner of each type of information, and an arrangement manner of each type of information in the scene information.

In some embodiments, a cloud-side 3D engine and the device-side 3D engine may be a same 3D engine (namely, a 3D engine of a same vendor and a same version), or may be different 3D engines. Data formats of scene information managed by different 3D engines are usually different. When the cloud-side 3D engine and the device-side 3D engine are different 3D engines, the scene information of the device-side scene 1 needs to be transformed into the scene information of the cloud-side scene 1 based on a data format of the scene information that corresponds to the advanced rendering type 1 and that is managed by the cloud-side 3D engine. The transformation process may also relate to simplification of the foregoing information content.

In some embodiments, when the cloud-side 3D engine and the device-side 3D engine are the same 3D engine, a data format of the scene information of the device-side scene 1 is the same as that of the cloud-side scene 1, the scene information of the device-side scene 1 may be consistent with that of the cloud-side scene 1, and there is no need to perform transformation.

In embodiments of this application, the developer may manually transform the device-side scene 1 into the cloud-side scene 1 according to the preset transformation rule by using the device-cloud collaboration plug-in SDK; or may automatically transform the device-side scene 1 into the cloud-side scene 1 according to the preset transformation rule by using a developed automatic transformation tool.

Step S103 is optional. In some embodiments, there is no need to perform S103, and the device-side scene is completely consistent with the cloud-side scene. Subsequently, the cloud-side scene 1 in embodiments is equivalent to the device-side scene 1.

It may be understood that, in this embodiment of this application, one device-side scene is transformed into one cloud-side scene for each advanced rendering type. For example, for the advanced rendering type 1 (for example, GI), the device-side scene 1 may be transformed into the cloud-side scene 1; or for an advanced rendering type 2 (for example, reflection), the device-side scene 1 may be transformed into the cloud-side scene 2.

S104: The device-cloud collaboration plug-in SDK sends the scene information of the cloud-side scene 1 and the advanced rendering type 1 to an IDE of the cloud-side 3D engine.

S105: The IDE of the cloud-side 3D engine adjusts the scene information of the cloud-side scene 1.

In some embodiments, a transformation error may occur in a process of transforming the device-side scene 1 into the cloud-side scene 1, and consequently, the preset transformation rule is not strictly complied with during scene transformation. For example, a human error occurring when a developer manually performs scene transformation or a running bug occurring when the automatic transformation tool automatically performs scene transformation may cause a transformation error. After the scene information of the cloud-side scene 1 is imported to the IDE of the cloud 3D engine, the developer can check and adjust the scene information of the cloud-side scene 1 by using the IDE of the cloud 3D engine. For example, the adjustment includes fixing a material, a geometric structure, a size, or a location of a 3D object model that has a transformation problem, and fixing spatial ranges and a quantity of GI probes.

Step S105 is optional. In some embodiments, there is no need to perform S105.

S106: The IDE of the device-side 3D engine performs basic rendering on the device-side scene 1 based on status data 1 of the device-side scene 1, to obtain basic rendering data 1.

Status data of the 3D scene includes data that is adjustable in scene information during running of the 3D scene, and the status data indicates a real-time status of the 3D scene. In the development phase, the IDE of the device-side 3D engine may simulate and generate various status data (for example, the status data 1) of the device-side scene 1, to debug rendering effect of the device-side scene 1 in the development phase.

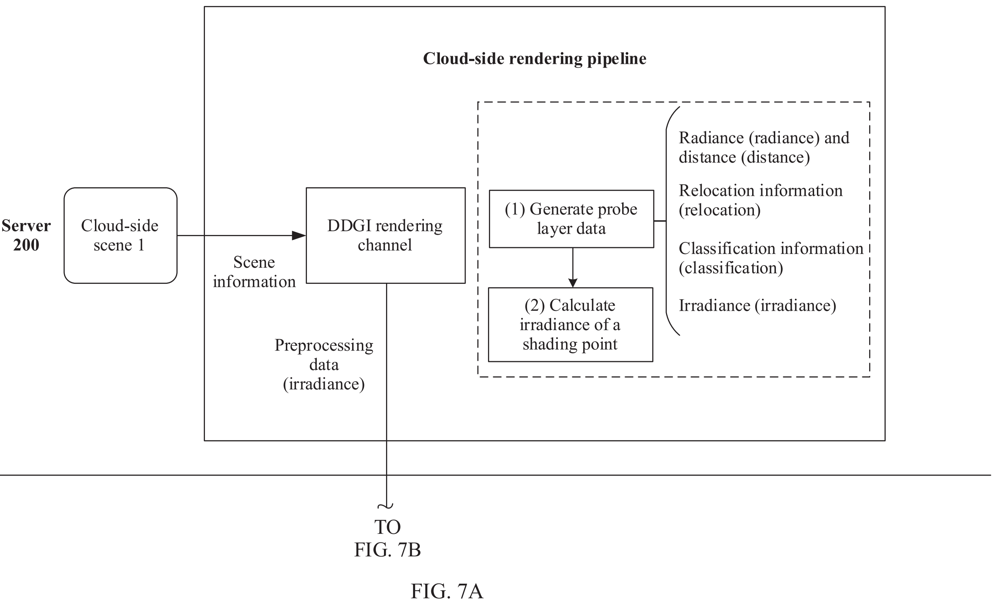

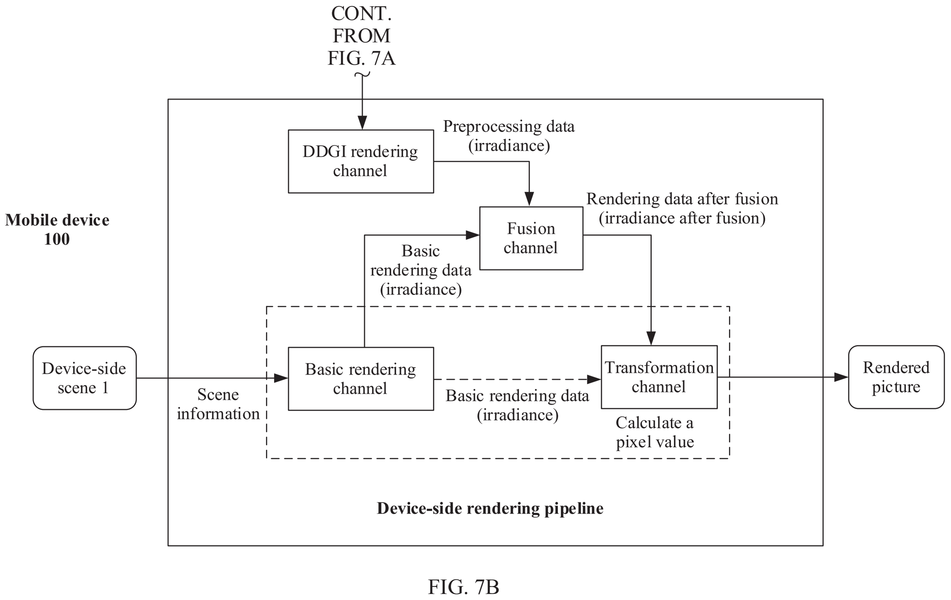

In some embodiments, the IDE of the device-side 3D engine updates the scene information of the device-side scene 1 based on the status data 1; and the IDE of the device-side 3D engine performs basic rendering on an updated device-side scene 1 by using a rasterization technology, to obtain the basic rendering data 1. In this embodiment of this application, when a network is poor, a game picture displayed after basic rendering can be obtained based on the basic rendering data 1. The game picture can ensure normal running of the game APP and normal interaction of a user operation. For example, as shown in FIG. 7A and FIG. 7B, in an implementation, a device-side rendering pipeline includes a basic rendering channel and a transformation channel. The basic rendering channel renders the device-side scene 1 by using the rasterization technology, and the output basic rendering data 1 includes irradiance of each pixel in an imaging picture of the device-side scene 1. The transformation channel determines a pixel value (for example, RGB color information) of each pixel in the imaging picture based on the basic rendering data 1, and outputs a basically rendered picture as a to-be-displayed rendered picture.

S107: The IDE of the device-side 3D engine sends status synchronization data 1 of the device-side scene 1 to the device-cloud collaboration plug-in SDK.

S108: The device-cloud collaboration plug-in SDK sends the status synchronization data 1 of the device-side scene 1 to a device-cloud collaboration framework in the server 200.

S109: The device-cloud collaboration framework in the server 200 sends the status synchronization data 1 of the device-side scene 1 to the IDE of the cloud-side 3D engine.

In some embodiments, the status synchronization data 1 includes status data required for implementing the advanced rendering type 1 of the cloud-side scene 1 in the status data 1. The status synchronization data 1 may include a part or all of data in the status data 1. The device-cloud collaboration plug-in SDK synchronizes the status synchronization data 1 to the IDE of the cloud-side 3D engine, and the IDE of the cloud-side 3D engine may update, based on the status synchronization data 1, the cloud-side scene 1 to be in a latest status.

S110: The IDE of the cloud-side 3D engine updates the cloud-side scene 1 based on the status synchronization data 1, and performs preprocessing of the advanced rendering type 1 on an updated cloud-side scene 1, to obtain preprocessing data 1 of the advanced rendering type 1.

The advanced rendering type 1 may be rendering of any one of illumination features such as GI, AO, soft shadow, reflection, refraction, and caustics. Rendering algorithms of the illumination features such as GI, AO, soft shadow, reflection, refraction, and caustics are not specifically limited in embodiments of this application. For example, a rendering algorithm for implementing GI includes but is not limited to: ray tracing, path tracing (Path Tracing), dynamic diffuse global illumination (Dynamic Diffuse Global Illumination, DDGI) spherical harmonic lighting (Spherical harmonic lighting) algorithm, voxel-based global illumination (Voxel-based Global Illumination), point-based global illumination (Point-Based Global Illumination), and the like.

In this embodiment of this application, the IDE of the cloud-side 3D engine may update, based on the status synchronization data 1 of the device-side scene 1, the scene information of the cloud-side scene 1 corresponding to the device-side scene 1, and perform preprocessing of the advanced rendering type 1 (for example, GI) on the updated cloud-side scene 1 according to a rendering algorithm 1, to obtain preprocessing data. The preprocessing data may indicate lighting effect of the advanced rendering type 1 in the cloud-side scene 1.

For example, preprocessing of the advanced rendering type 1 is described by using an example in which the advanced rendering type 1 is GI, and the rendering algorithm 1 is a DDGI algorithm. In the DDGI algorithm, a GI probe is used to: store illumination information of a scene and dynamically update the illumination information by using a ray tracing method, to implement real-time dynamic diffuse global illumination effect. In the DDGI algorithm, a group of probes is packaged into a DDGI volume (namely, a cube area in 3D space). Provided that the volume is dragged into a to-be-rendered scene, the volume automatically places the probes in the scene, and a shading point in the volume automatically captures illumination information through surrounding probes.

In some embodiments, the scene information of the cloud-side scene 1 includes related information (such as a deployment rule, a deployment location, and data) of the GI probe. As shown in FIG. 7A and FIG. 7B, based on the scene information of the cloud-side scene 1, the IDE of the cloud-side 3D engine deploys and runs the GI probe in the cloud-side scene 1 through a DDGI rendering channel of a cloud-side rendering pipeline. The GI probe obtains and stores illumination information at a location of the GI probe, to generate probe layer data. The probe layer data includes illumination information of each GI probe, and the illumination information of the GI probe includes irradiance (irradiance). A shading point corresponding to each pixel in the imaging picture in the cloud-side scene 1 is determined based on a field of view of a camera. For any shading point (for example, the shading point 1) in the volume in the cloud-side scene 1, the DDGI rendering pipeline obtains illumination information of eight GI probes around the shading point 1, and performs interpolation processing on irradiance based on the illumination information of the eight GI probes, to obtain irradiance of the shading point 1. Preprocessing data of GI includes irradiance of a shading point corresponding to each pixel in the imaging picture.

The probe deployed by using DDGI stores spherical information. In the DDGI algorithm, spherical data is encoded into a two-dimensional texture map through octahedral mapping. A minimum unit of the texture map is a texture pixel, where one texture pixel corresponds to one or more pixels. The illumination information of the GI probe may include irradiance (irradiance) received from a hemisphere in a direction of the texture pixel (w), a distance r(w) between the probe and a nearest object viewed in the direction of the texture pixel, and a squared distance r²(w). Herein, the irradiance is encoded as a three-dimensional vector texture, and r(w) and r²(w) are encoded together as a two-dimensional vector texture (where an x component stores r(w), and a y component stores r²(w)).

In an implementation, a probe 1 is any one of the eight GI probes, and performing interpolation processing on the irradiance based on the illumination information of the eight GI probes, to obtain the irradiance of the shading point 1 includes: obtaining three weight coefficients of the probe 1, namely, a trilinear difference coefficient, a direction coefficient, and a Chebyshev coefficient, and using a normalized value of a product of the three coefficients as a weight of the probe 1; and performing weighted processing on the irradiance of the eight GI probes based on a weight of each probe, to obtain the irradiance of the shading point 1. The trilinear interpolation coefficient indicates a distance between the probe 1 and the shading point 1, and a large coefficient indicates to reduce the weight of the probe 1. The direction coefficient indicates an included angle between a direction from the shading point 1 to the probe 1 and a surface normal of the shading point 1, and an excessively large coefficient indicates to reduce the weight of the probe 1. The Chebyshev coefficient indicates a probability of an obstacle occurring between the probe 1 and the shading point 1, and a large coefficient indicates to reduce the weight of the probe 1. The Chebyshev coefficient is determined based on the distance r(w) and the squared distance r²(w).

In some embodiments, in addition to illumination information of the probe 1, the probe layer data further includes classification information (classification) and relocation information (relocation) of the probe 1. The classification information indicates whether a state (state) of the probe 1 is a valid-probe state, and further, whether to use the illumination information of the probe 1 is determined based on the state of the probe 1. The relocation information (relocation) indicates whether to adjust and how to adjust a location of the probe 1.

For example, preprocessing of the advanced rendering type 1 is described by using an example in which the advanced rendering type 1 is reflection, and the rendering algorithm 1 is a reflection probe-based reflection capture algorithm. The IDE of the cloud-side 3D engine deploys and runs a reflection probe in the cloud-side scene 1 by using the cloud-side rendering pipeline, to obtain illumination information of the reflection probe. The illumination information of the reflection probe includes a cubemap (cubemap) at a location of the reflection probe. The cubemap is synthesized from reflection texture images obtained by the reflection probe in six directions: front, rear, left, right, up, and down of the camera. The cubemap may be used to implement environment mapping, and the environment mapping may be used to simulate an environment around a probe. Preprocessing data of reflection includes cubemaps of all reflection probes in the cloud-side scene 1, or one or more cubemaps to which a location that is of the camera and that is uploaded by the device side belongs, or a cubemap obtained by fusing the one or more cubemaps, or a cubemap of a reflection probe nearest to the camera.

S111: The IDE of the cloud-side 3D engine sends the preprocessing data 1 of the advanced rendering type 1 to the device-cloud collaboration plug-in SDK.

In some embodiments, in step S110, the IDE of the cloud 3D engine performs preprocessing of the advanced rendering type 1, and the obtained preprocessing data includes preprocessing data within all field of view ranges of the camera. The IDE of the cloud-side 3D engine crops the preprocessing data based on a field of view of the camera in the status synchronization data 1, to obtain the preprocessing data 1 within the field of view of the camera, namely, preprocessing data related to a device-side user of the mobile device 100, and sends the preprocessing data 1 to the device-cloud collaboration plug-in SDK.

S112: The device-cloud collaboration plug-in SDK sends the preprocessing data 1 of the advanced rendering type 1 to the IDE of the device-side 3D engine.

In some embodiments, the IDE of the cloud-side 3D engine compresses and encodes the preprocessing data 1 according to a preset encoding algorithm, and sends the encoded preprocessing data to the device-cloud collaboration plug-in. The device-cloud collaboration plug-in SDK decodes the received preprocessing data according to a decoding algorithm corresponding to the preset encoding algorithm, to obtain the decoded preprocessing data 1, and sends the decoded preprocessing data 1 to the IDE of the device-side 3D engine. The preset encoding algorithm is not specifically limited in embodiments of this application.

S113: The IDE of the device-side 3D engine fuses the basic rendering data 1 and the preprocessing data 1 of the advanced rendering type 1, to obtain an image 1 with rendering effect of the advanced rendering type 1.

It may be understood that because the scene information of the device-side scene 1 includes the scene information of the cloud-side scene 1, and the device-side scene 1 and the cloud-side scene 1 are synchronized for same status data (for example, camera information), pixels that are in an imaging picture and that are indicated by the basic rendering data 1 generated through basic rendering may be in a one-to-one correspondence with pixels that are in an imaging picture and that are indicated by the preprocessing data 1 of advanced rendering.

In some embodiments, the advanced rendering type 1 is GI, the rendering algorithm is a DDGI algorithm, the basic rendering data 1 includes irradiance of each pixel that is in the imaging picture and that is obtained through rasterization rendering, and the preprocessing data 1 includes irradiance of each pixel that is in the imaging picture and that is obtained through DDGI rendering. As shown in FIG. 7A and FIG. 7B, a module in the device-cloud collaboration plug-in SDK adds a fusion channel to the device-side rendering pipeline based on an extension mechanism of a rendering pipeline in the device-side 3D engine, to consume the preprocessing data. The basic rendering channel outputs the basic rendering data 1 to the fusion channel. The IDE of the device-side 3D engine inputs the received preprocessing data 1 from the DDGI rendering channel on the cloud side into a DDGI rendering channel on the device side. The DDGI rendering channel outputs the preprocessing data 1 to the fusion channel. The fusion channel outputs fused rendering data. The fused rendering data includes fused irradiance, and fused irradiance of a pixel at a coordinate 1 is equal to a product of irradiance of the pixel at the coordinate 1 in the basic rendering data 1 and irradiance of the pixel at the coordinate 1 in the preprocessing data 1. The foregoing fused rendering data is input into the transformation channel. The transformation channel can determine a pixel value of each pixel based on the fused rendering data, to output a rendered picture (namely, the image 1).

As shown in FIG. 7A and FIG. 7B, when a network is poor, if the DDGI rendering channel on the device side does not receive the preprocessing data 1 fed back by the cloud side, the basic rendering data 1 is input into the fusion channel, and then, the fusion channel outputs the basic rendering data 1 to the transformation channel. The transformation channel may determine a pixel value of each pixel based on the basic rendering data 1, to output a basically rendered image as a to-be-displayed rendered picture. The basically rendered image has no lighting effect of the advanced rendering type 1. The game APP may display the basically rendered image, to ensure normal running of the game APP.

In some embodiments, the advanced rendering type 1 is reflection, the rendering algorithm is a reflection probe-based reflection capture algorithm, and the basic rendering data (and the basically rendered image) includes pixel information (for example, a color) of each pixel that is in the imaging picture and that is obtained through rasterization rendering. Preprocessing data 1 of reflection includes a cubemap of a reflection probe in the cloud-side scene 1. Pixel information (for example, a color) of each pixel in the imaging picture after reflection rendering is determined based on the cubemap of the reflection probe. Pixel information of pixels at a same coordinate in the imaging picture of basic rendering and the imaging picture of reflection rendering is fused, and fused pixel information is used as pixel information of a pixel at a same coordinate in the image 1.

In some embodiments, determining the pixel information (for example, a color) of each pixel in the imaging picture after reflection rendering based on the cubemap of the reflection probe includes: The preprocessing data 1 of reflection includes cubemaps of all reflection probes in the cloud-side scene 1; determining, based on a location of the camera, one or more cubemaps to which the location of the camera belongs in the cubemaps of all the reflection probes; determining a cubemap 1 obtained by fusing the one or more cubemaps; determining that an intersection point of a reflection vector R of a ray emitted from the camera and reflected by the ground and a bounding sphere including the cubemap 1 is P; using a vector CP from a center point C of the cubemap 1 to the intersection point P as a new reflection vector R'; and sampling the cubemap 1 based on the reflection vector R', that is, determining pixel information (for example, a color) of a corresponding pixel in the imaging picture based on a texture at an intersection point of the reflection vector R' and the cubemap 1.

The preprocessing data 1 of reflection may also include one or more cubemaps to which a location that is of the camera and that is uploaded by the device side belongs, or a cubemap obtained by fusing the one or more cubemaps, or a cubemap of a reflection probe nearest to the camera. For details about how to calculate pixel information of each pixel in the imaging picture after reflection rendering, refer to the foregoing embodiments. Details are not described herein again.

S114: The developer adjusts, based on advanced rendering effect presented by the image 1, a preprocessing-related parameter 1 in the scene information of the cloud-side scene 1 by using the IDE of the cloud-side 3D engine.

In this embodiment of this application, when the advanced rendering effect presented by the image 1 is unsatisfactory, the developer may adjust a preprocessing-related parameter (for example, the parameter 1) of the cloud-side scene on the cloud side. For example, when observing that rendering effect of a virtual object 1 in the image 1 does not meet an expected effect, the developer adjusts a material of the virtual object; or when observing that lighting effect of GI in the image 1 is not real enough, the developer adjusts location information of a GI probe, parameter information of GI computation, and the like.

S115: The IDE of the cloud-side 3D engine performs preprocessing of the advanced rendering type 1 based on a cloud-side scene 1 existing after the parameter 1 is adjusted, to obtain updated preprocessing data 2.

S116: The IDE of the cloud-side 3D engine sends an adjusted parameter 1 and the updated preprocessing data 2 to the device-cloud collaboration plug-in.

S117: The device-cloud collaboration plug-in sends the adjusted parameter 1 and the updated preprocessing data 2 to the IDE of the device-side 3D engine.

The adjusted parameter 1 and the updated preprocessing data 2 may be sent simultaneously, or may be sent separately.

S118: The IDE of the device-side 3D engine updates a parameter 1 in the scene information of the device-side scene 1, so that the parameter 1 in the scene information of the device-side scene 1 is synchronized with that in the scene information of the cloud-side scene 1; and performs basic rendering based on a device-side scene 1 existing after the parameter 1 is updated, to obtain basic rendering data 2.

S119: The IDE of the device-side 3D engine fuses the basic rendering data 2 and the preprocessing data 2, to obtain an image 2 with the rendering effect of the advanced rendering type 1.

S120: The IDE of the device-side 3D engine adjusts, based on the rendering effect of the image 2, a parameter 2 of the device-side scene 1 and/or processing logic for consuming the preprocessing data.

In this embodiment of this application, when advanced rendering effect presented by the image 2 is unsatisfactory, a related parameter (for example, the parameter 2) of the device-side scene may be further adjusted on the device side. When a rendering latency of the image 2 is large, the processing logic for consuming the preprocessing data may be further adjusted, for example, an algorithm for encoding/decoding the preprocessing data is adjusted. This improves an encoding/decoding rate of the preprocessing data and reduces a rendering latency of device-cloud collaborative rendering.

S121: The IDE of the device-side 3D engine performs basic rendering based on the device-side scene 1 existing after the parameter 2 is adjusted, to obtain basic rendering data 3.

S122: After the rendering pipeline of the IDE of the device-side 3D engine fuses the basic rendering data 3 and the preprocessing data 2 of the advanced rendering type 1, obtain an image 3 with the rendering effect of the advanced rendering type 1.

In some embodiments, if the scene information of the cloud-side scene 1 does not include the parameter 2, S122 is performed after S121, that is, the basic rendering data 3 is fused with the preprocessing data 2, to obtain a to-be-displayed rendered picture. When the scene information of the cloud-side scene 1 includes the parameter 2, after the parameter 2 of the device-side scene 1 is adjusted, a parameter 2 of the cloud-side scene 1 needs to be adjusted synchronously, the preprocessing data of the advanced rendering is updated to preprocessing data 3 based on an adjusted cloud-side scene 1, and the basic rendering data 3 is fused with the preprocessing data 3, to obtain a to-be-displayed rendered picture. In an implementation, after step S121, the method further includes A1 to A7.

A1: The IDE of the device-side 3D engine sends an adjusted parameter 2 to the device-cloud collaboration plug-in SDK, so that the parameter 2 in the scene information of the device-side scene 1 remains synchronized with that of the cloud-side scene 1.

A2: The device-cloud collaboration plug-in SDK sends the adjusted parameter 2 to the device-cloud collaboration framework in the server 200.

A3: The device-cloud collaboration framework in the server 200 sends the adjusted parameter 2 to the IDE of the cloud-side 3D engine.

A4: The IDE of the cloud-side 3D engine updates the parameter 2 in the scene information of the device-side scene 1, so that the parameter 1 in the scene information of the device-side scene 1 is synchronized with that in the scene information of the cloud-side scene 1; and perform preprocessing of the advanced rendering type 1 on an updated cloud-side scene 1, to obtain the preprocessing data 3 of the advanced rendering type 1.

A5: The IDE of the cloud-side 3D engine sends the preprocessing data 3 of the advanced rendering type 1 to the device-cloud collaboration plug-in.

A6: The device-cloud collaboration plug-in sends the preprocessing data 3 of the advanced rendering type 1 to the IDE of the device-side 3D engine.

A7: After the rendering pipeline of the IDE of the device-side 3D engine fuses the basic rendering data 3 and the preprocessing data 3 of the advanced rendering type 1, obtain an image 4 with the rendering effect of the advanced rendering type 1.

Some or all of the steps S114 to S122 are optional. In some embodiments, the developer triggers parameter adjustment only on the cloud side, that is, the steps S114 to S119 are performed, and there is no need to perform the steps S120 to S122. In some embodiments, the developer triggers parameter adjustment only on the device side, that is, the steps S120 to S122 are performed, and there is no need to perform the steps S114 to S119.

A specific sequence of performing the steps S114 to S119 and the steps S120 to S122 is not specifically limited in embodiments of this application. In some embodiments, the developer may alternatively first trigger parameter adjustment on the device side (that is, the steps S114 to S119), and then trigger parameter adjustment on the cloud side (S120 to S122).

In some embodiments, after step S122, if the rendering effect of the adjusted advanced rendering image still does not meet a rendering requirement of the developer, the steps S114 to S119 and the steps S120 to S122 are repeatedly performed, that is, iterative adjustment is performed on the cloud side and the device side, until the rendering effect meets the rendering requirement of the developer.

In some embodiments, in step S101, the advanced rendering type 1 (for example, GI) and the device-side scene 1 are selected, and the steps S106 to S122 are performed for different status data of the device-side scene 1; the device-side scene 1 is selected, and the steps S101 to S122 are performed for different advanced rendering types; and the steps S101 to S122 are performed for different device-side scenes. In this way, dual-side scenes in the device-cloud collaborative rendering solution are tested and adjusted, so that the device-cloud collaborative rendering solution provided in embodiments of this application can implement better advanced rendering effect for any advanced rendering type, any device-side scene, and any status of the device-side scene.

S123: The device-cloud collaboration plug-in SDK packages the adjusted device-side scene and a related file into a game APP.

S124: The IDE of the cloud-side 3D engine packages the adjusted cloud-side scene and a related file, and uploads the adjusted cloud-side scene and the related file to an advanced rendering service on the cloud side.

Refer to the steps S101 to S122. After debugging rendering effect of all game scenes (device-side scenes) of the game APP, the developer packages, into a device-side APP, a project file to which the adjusted device-side scene belongs, for example, packages the scene information of the adjusted device-side scene 1, a scene ID of the device-side scene 1, and the advanced rendering type 1 into an application package of the game APP. The developer packages and upload the adjusted cloud-side scene to the advanced rendering service on the cloud side, for example, packages the scene information of the cloud-side scene 1, a correspondence among a scene ID of the cloud-side scene 1, a scene ID of the device-side scene 1 and the advanced rendering type 1, and the like. A scene management module in the advanced rendering service on the cloud side is responsible for managing the uploaded cloud-side scene, and records correspondences among scene IDs of various device-side scenes, various advanced rendering types, and scene IDs of cloud-side scenes.

S125: The developer associates authentication and authorization information of the advanced rendering service on the cloud side with authentication and authorization information of the game APP on the mobile device 100, where the authentication and authorization information is used to verify validity of the mobile device 100.

An authentication and authorization manner and the authentication and authorization information between the advanced rendering service on the cloud side and the device-side APP are not specifically limited in embodiments of this application.

In some embodiments, that the developer associates the authentication and authorization information of the advanced rendering service on the cloud side with the authentication and authorization information of the game APP on the mobile device 100 includes: The developer registers an advanced rendering service of the game APP on a portal website, to obtain a key pair, namely, a public key (Public Key) 1 and a private key (Private Key) 1; stores the public key 1 in the game APP on the device side, and stores the private key 1 in the device-cloud collaboration framework on the cloud side. The authentication and authorization information on the device side is the public key 1, and the public key 1 is used to encrypt a session and verify a digital signature. The authentication and authorization information on the cloud side is the private key 1 corresponding to the public key 1, and only the private key 1 can be used to decrypt data encrypted by the public key 1.

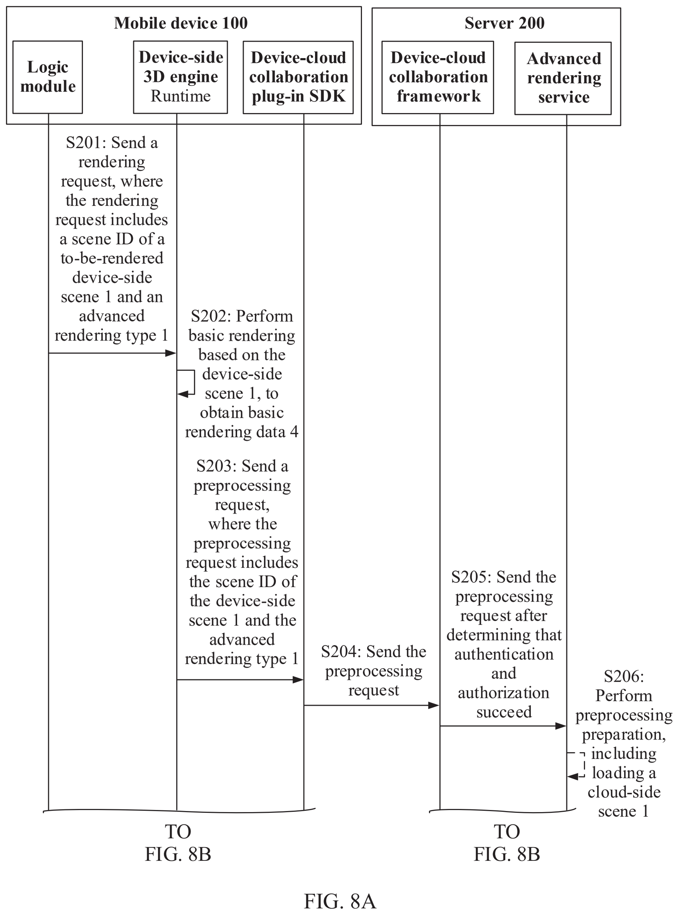

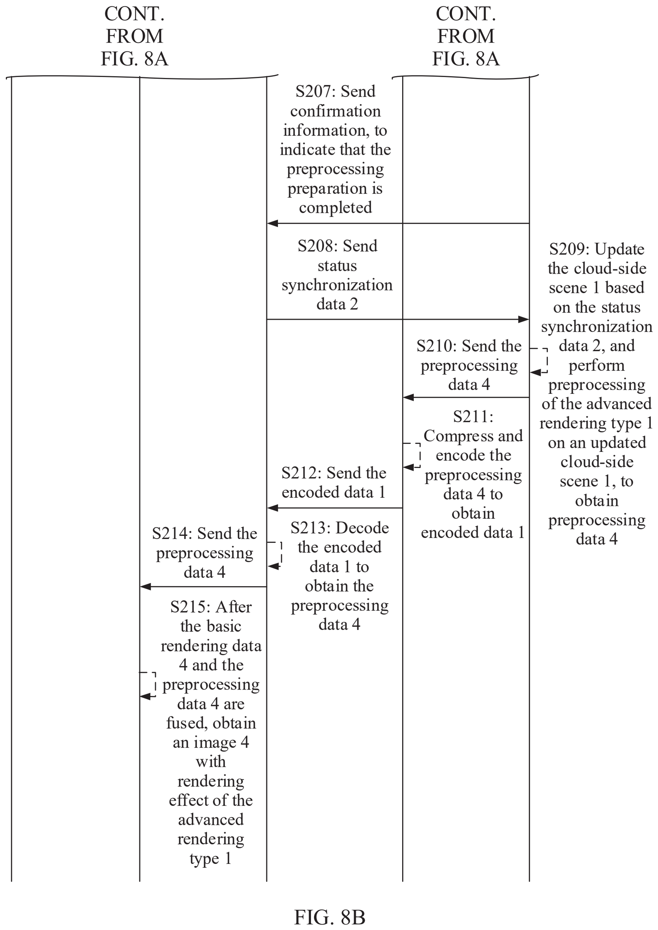

The game APP on the mobile device further includes a logic module. FIG. 8A and FIG. 8B show a method flowchart of a device-cloud collaborative rendering method in a running phase. A method procedure includes some or all of steps S201 to S215.

S201: A logic module in a mobile device 100 sends a rendering request to a Runtime in a device-side 3D engine, where the rendering request includes a scene ID of a to-be-rendered device-side scene 1 and an advanced rendering type 1, and the rendering request is used to request to perform rendering based on a latest status of the device-side scene 1, to obtain an image with rendering effect of the advanced rendering type 1.

In some embodiments, a game picture in a game scene of a game APP is refreshed at a preset refresh rate. When detecting that the game picture in the current game scene is updated, the logic module sends the rendering request to the Runtime in the device-side 3D engine, to render an updated game picture. The updated game picture is displayed in a new refresh period. For example, when detecting that a user switches a field of view of a game, the game APP updates the game picture based on a switched field of view. The mobile device 100 may obtain, from an application package of the game APP, scene information of the device-side scene 1, the scene ID of the device-side scene 1, and the advanced rendering type 1 that correspond to the current game picture.

S202: The Runtime in the device-side 3D engine performs basic rendering based on the current scene information of the device-side scene 1, to obtain basic rendering data 4.

For details, refer to related descriptions of step S106. Details are not described herein again.

S203: The Runtime in the device-side 3D engine sends a preprocessing request for the advanced rendering type 1 to a device-cloud collaboration plug-in SDK, where the preprocessing request includes the scene ID of the device-side scene 1 and the advanced rendering type 1, and the preprocessing request indicates to perform preprocessing of the advanced rendering type 1 on a cloud-side scene corresponding to the device-side scene 1 and the advanced rendering type 1.

S204: The device-cloud collaboration plug-in SDK sends the preprocessing request to a device-cloud collaboration framework.

S205: The device-cloud collaboration framework performs authentication and authorization based on the received preprocessing request, and the device-cloud collaboration framework sends the preprocessing request to an advanced rendering service after authentication and authorization succeed.

In some embodiments, the Runtime in the device-side 3D engine sends, to the device-cloud collaboration plug-in SDK, the preprocessing request encrypted by using the public key 1. The device-cloud collaboration framework decrypts the received preprocessing request by using the private key 1. If the decryption succeeds, the authentication and authorization succeed, and the device-cloud collaboration framework sends the decrypted preprocessing request to the advanced rendering service. An authentication and authorization manner between the advanced rendering service in the server 200 and the game APP on the mobile device 100 is not specifically limited in embodiments of this application.

S206: The advanced rendering service performs preprocessing preparation, including loading the cloud-side scene 1 and preparing a rendering pipeline of the advanced rendering type 1, where the cloud-side scene 1 is determined based on the scene ID of the device-side scene 1 and the advanced rendering type 1 in the preprocessing request.

In some embodiments, in step S124, the advanced rendering service packages a correspondence among a scene ID of a device-side scene, an advanced rendering type, and a scene ID of a cloud-side scene, for example, a correspondence among the scene ID of the device-side scene 1, the advanced rendering type 1, and a scene ID of the cloud-side scene 1, and scene information of the cloud-side scene. The cloud-side scene 1 may be determined, based on the correspondence, as a cloud-side scene existing after the device-side scene 1 is transformed for the advanced rendering type 1, namely, a to-be-rendered scene.

In some embodiments, the preprocessing request may further include a game ID of a game to which the device-side scene 1 belongs. The advanced rendering service may record scene IDs of device-side scenes of games through classification on game IDs, to help the advanced rendering service quickly locate the device-side scene 1 and the cloud-side scene 1 corresponding to the device-side scene 1.

S207: The advanced rendering service sends confirmation information to the device-cloud collaboration plug-in SDK, where the confirmation information indicates that the preprocessing preparation is completed.

S208: The device-cloud collaboration plug-in SDK sends, to the advanced rendering service, status synchronization data 2 related to preprocessing of the advanced rendering type 1.

Specifically, for the status synchronization data 2, refer to related descriptions of the status synchronization data 1. Details are not described herein again.

S209: The advanced rendering service updates the cloud-side scene 1 based on the received status synchronization data 2, and performs preprocessing of the advanced rendering type 1 based on scene information of an updated cloud-side scene 1, to obtain preprocessing data 4.

For details, refer to related descriptions of step S110. Details are not described herein again. In this embodiment of this application, the advanced rendering service performs only preprocessing of advanced rendering, and does not run the full game APP. In comparison with the method 1, this method reduces consumption of computing resources on a cloud side.

S210: The advanced rendering service sends, to the device-cloud collaboration framework, the preprocessing data 4 related to a device-side user.

In some embodiments, in step S209, the advanced rendering service performs preprocessing of the advanced rendering type 1, to obtain preprocessing data within all field of view ranges of a camera. The advanced rendering service crops the preprocessing data based on a current field of view of the camera in the status synchronization data 2 uploaded by the mobile device 100, to obtain the preprocessing data 4 within the current field of view range of the camera, namely, preprocessing data related to the device-side user of the mobile device 100, and sends the preprocessing data 4 to the device-cloud collaboration framework in step S210. In some embodiments, the preprocessing data 4 generated in step S209 is the preprocessing data within the current field of view range of the camera, and does not need to be cropped.

S211: The device-cloud collaboration framework compresses and encodes the preprocessing data 4 to obtain encoded data 1.

S212: The device-cloud collaboration framework sends the encoded data 1 to the device-cloud collaboration plug-in SDK.

S213: The device-cloud collaboration plug-in SDK decodes the encoded data 1 to obtain the preprocessing data 4.

In some embodiments, an IDE of a cloud-side 3D engine compresses and encodes the preprocessing data 4 according to a preset encoding algorithm, to obtain the encoded data 1; and then encapsulates the encoded data 1 by using a preset communication protocol, and sends the encoded data 1 to the device-cloud collaboration plug-in SDK. The device-cloud collaboration plug-in decapsulates the received data to obtain the encoded data 1, and decodes the received encoded data 1 according to a preset encoding algorithm, to obtain the decoded preprocessing data 4. The preset encoding algorithm and the preset communication protocol are not specifically limited in embodiments of this application. For example, the preset encoding algorithm is an HEVC algorithm, and the preset communication protocol is a UDP protocol.

In this embodiment of this application, data transmitted by the cloud side to a device side is preprocessing data after compression and encoding, and requires a lower transmission bandwidth than video stream data transmitted in the method 1.

S214: The device-cloud collaboration plug-in SDK sends the preprocessing data 4 to the Runtime of the device-side 3D engine.

S215: The Runtime of the device-side 3D engine fuses the basic rendering data 4 and the preprocessing data 4, to obtain an image 4 with the rendering effect of the advanced rendering type 1.

For details, refer to related descriptions of step S113. Details are not described herein again.

In some embodiments, in step S201, the rendering request and the preprocessing request may alternatively include a plurality of advanced rendering types. The server 200 may perform preprocessing on the cloud-side scene 1 based on each of the plurality of advanced rendering types in the preprocessing request, and feed back preprocessing data of each advanced rendering type to the mobile device 100. The mobile device 100 may fuse the basic rendering data and the preprocessing data of the plurality of advanced rendering types, to generate an image with lighting effect of the plurality of advanced rendering types.

In this embodiment of this application, the game APP on the device side needs to have only a capability of performing basic rendering on a 3D scene. The game APP implements advanced rendering on the 3D game scene by invoking the device-cloud collaboration plug-in SDK. After the basic rendering data is fused with the preprocessing data of advanced rendering, an ultimately rendered image presents lighting effect of advanced rendering, for example, lighting effect that can be implemented through ray tracing. In this way, a 3D application (for example, the game APP) running on a mobile device with a weak GPU capability has an advanced rendering capability (for example, a ray tracing capability), so that user experience is effectively improved.

For example, the to-be-rendered device-side scene 1 is a game scene in which a plurality of players participate in the game APP, and the plurality of game players simultaneously participate in a same instance of the game scene, such as a user 1 of the mobile device 100 and a user 2 of a mobile device 300. If the lighting effect of the advanced rendering type 1 (for example, GI) in the current scene is unrelated to a field of view of a user, the preprocessing data of the advanced rendering type 1 may be shared with another player of the game, so that the another player implements advanced rendering effect on the device side. It may be understood that, for the device-side scene 1 in the latest status and an advanced rendering type unrelated to a field of view, the server 200 does not need to perform preprocessing once for each user, and needs to perform preprocessing only once and share a preprocessing result with another user. In this way, consumption of computing resources on the cloud side is further reduced in the device-cloud collaborative rendering solution.

In some embodiments, the preprocessing request may further include an instance ID of a game instance currently running on the device-side scene 1. Another player who is in a same instance as the device-side user of the mobile device 100 may be queried based on a game ID, a scene ID, and the instance ID.

In some embodiments, preprocessing of the advanced rendering type 1 of the device-side scene 1 in the latest status may be field-of-view-unrelated processing or field-of-view-related processing. The field-of-view-unrelated processing is processing unrelated to a current field of view (namely, the field of view of the camera) of the device-side user. For example, in the game scene in the latest status, even if current fields of view of the user 1 and the user 2 in the game scene are different, the user 1 and the user 2 view same lighting effect of the advanced rendering type 1 in the game picture, and therefore, the preprocessing of the advanced rendering type 1 is the same. The field-of-view-related processing is processing related to a current field of view (namely, the field of view of the camera) of the device-side user of the mobile device 100. For example, in the game scene in the latest status, although the user 1 and the user 2 are in a same instance of the same game scene, the user 1 and the user 2 view different lighting effect related to the advanced rendering type 1 in the game picture because the users have different fields of view, and therefore, advanced rendering of the advanced rendering type 1 is also different.

In some embodiments, the method further includes: The Runtime of the device-side 3D engine in the mobile device 200 performs basic rendering on the device-side scene 1 to obtain basic rendering data 5; the advanced rendering service in the server 200 determines whether preprocessing of the advanced rendering type 1 of the cloud-side scene 1 is field-of-view-unrelated processing; and if preprocessing of the advanced rendering type 1 of the cloud-side scene 1 is field-of-view-unrelated processing, the preprocessing data of the advanced rendering type 1 may be shared with another user, for example, the user 2, who simultaneously participates in the device-side scene 1, that is, the device-cloud collaboration framework sends the encoded preprocessing data 4 to the device-cloud collaboration plug-in SDK of the mobile device 200. The device-cloud collaboration plug-in SDK in the mobile device 200 sends the decoded preprocessing data 4 to the Runtime of the device-side 3D engine, and the Runtime of the device-side 3D engine fuses the basic rendering data 5 and the preprocessing data 4, to obtain an image 5 with the rendering effect of the advanced rendering type 1.

In the implementation solution 2 provided in embodiments of this application, the native device-side 3D engine supports the device-cloud collaborative rendering method.

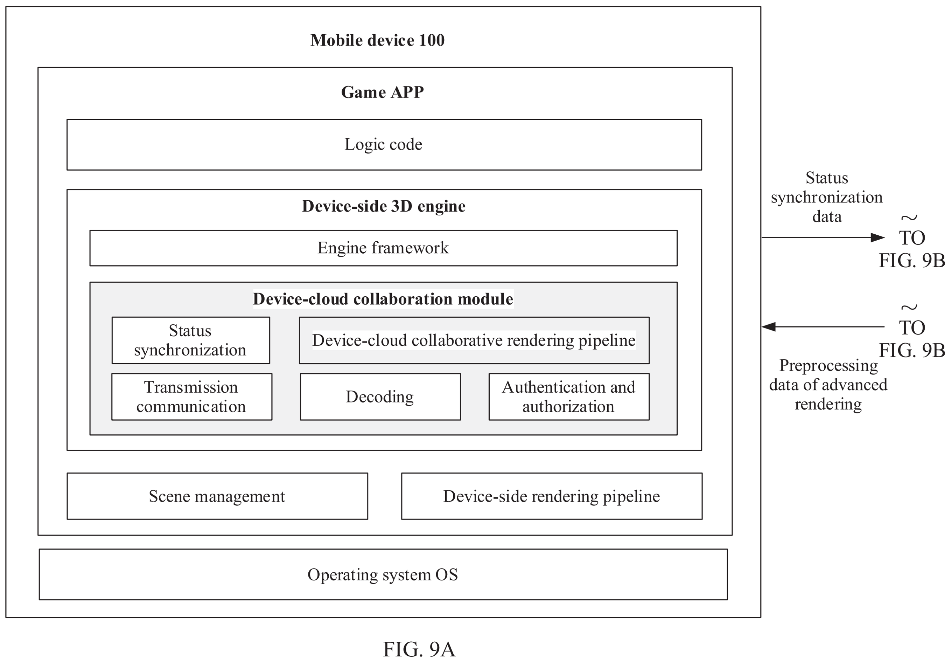

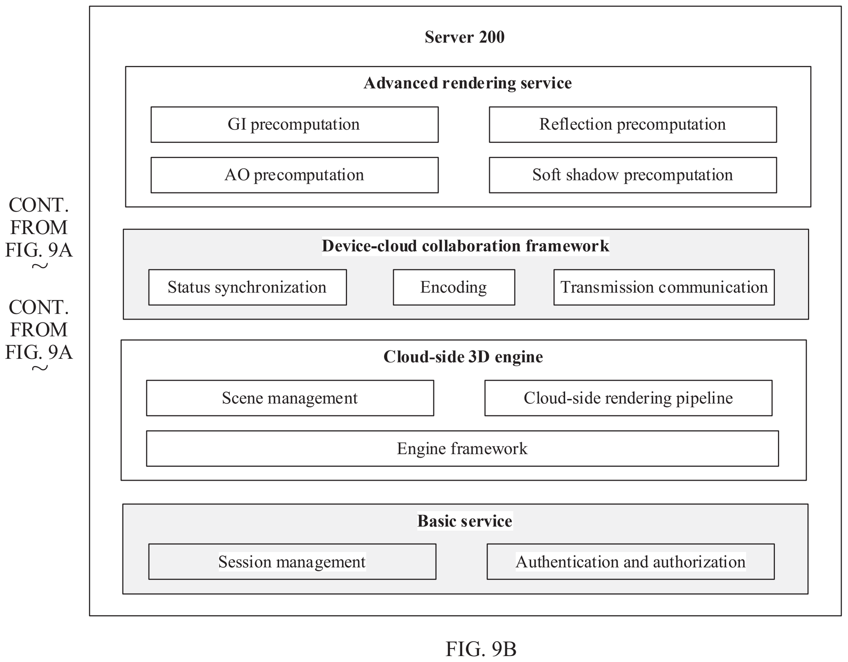

For example, FIG. 9A and FIG. 9B are a diagram of a system architecture of a device-cloud collaborative rendering system in the implementation solution 2. In comparison with the system architecture in which the device-cloud collaboration plug-in SDK is deployed shown in FIG. 5A and FIG. 5B, main differences between the device-cloud collaborative rendering system shown in FIG. 9A and FIG. 9B and the device-cloud collaborative rendering system shown in FIG. 5A and FIG. 5B are described below.
(1) In the implementation solution 1 shown in FIG. 5A and FIG. 5B, the device-side 3D engine is provided with the device-cloud collaborative rendering capability by using the device-cloud collaboration plug-in SDK. The device-cloud collaboration plug-in SDK may be downloaded from an application store or a browser, or obtained in other manners. A developer can clearly perceive existence of the SDK. In the implementation solution 2 shown in FIG. 9A and FIG. 9B, the device-side 3D engine natively supports the device-cloud collaborative rendering method. A function in the device-cloud collaboration plug-in SDK may be built in the device-side 3D engine in a module/preset plug-in manner, and the developer does not need to download and install the function from an application store or the like.
(2) In the implementation solution 1 shown in FIG. 5A and FIG. 5B, the device-side 3D engine is usually different from the cloud-side 3D engine, and therefore, a scene transformation capability needs to be provided in the device-cloud collaboration plug-in SDK. In the implementation solution 2 shown in FIG. 9A and FIG. 9B, when the cloud-side 3D engine is consistent with the device-side 3D engine, a functional module for scene transformation may no longer be required in a device-cloud collaboration module. It should be noted that, even if there is no scene transformation in the implementation solution 2, the cloud-side scene and the device-side scene may not be completely the same. For example, precision of the mesh information is reduced in the cloud-side scene.
(3) In the implementation solution 1 shown in FIG. 5A and FIG. 5B, a rendering capability of consuming preprocessing data needs to be added to the original rendering pipeline, and therefore, a pipeline adaptation capability needs to be provided in the device-cloud collaboration plug-in SDK. For example, as shown in FIG. 7A and FIG. 7B, a functional module for pipeline adaptation adds the fusion channel to the device-side rendering pipeline based on an extension mechanism of the rendering pipeline in the device-side 3D engine, to consume the preprocessing data. In the implementation solution 2 shown in FIG. 9A and FIG. 9B, a device-cloud collaboration module in the device-side 3D engine may provide a native device-cloud collaborative rendering pipeline, and the device-cloud collaborative rendering pipeline may have a capability of consuming preprocessing data. Therefore, the functional module for pipeline adaptation shown in FIG. 7A and FIG. 7B is no longer required.

In the implementation solution 2 of this application, a method procedure in a development phase and a method procedure in a running phase are similar to those in the implementation solution 1. Details are not described herein again.

In this embodiment of this application, a first electronic device may be the mobile device 100, and a second electronic device may be the mobile device 300. A first request may be the preprocessing request. The first application may be the 3D application (for example, the game APP). A first device-side scene may be the device-side scene 1, a first advanced rendering type may be the advanced rendering type 1, and a first cloud-side scene may be the cloud-side scene 1. A second advanced rendering type may be the advanced rendering type 2, and a second cloud-side scene may be the cloud-side scene 2. First basic rendering data may be the basic rendering data 4, first status data may be the status synchronization data 2, and first preprocessing data may be the preprocessing data 4. A first image may be the image 4. The first coordinate may be the coordinate 1. Third basic rendering data may be the basic rendering data 5, and a third image may be the image 5.

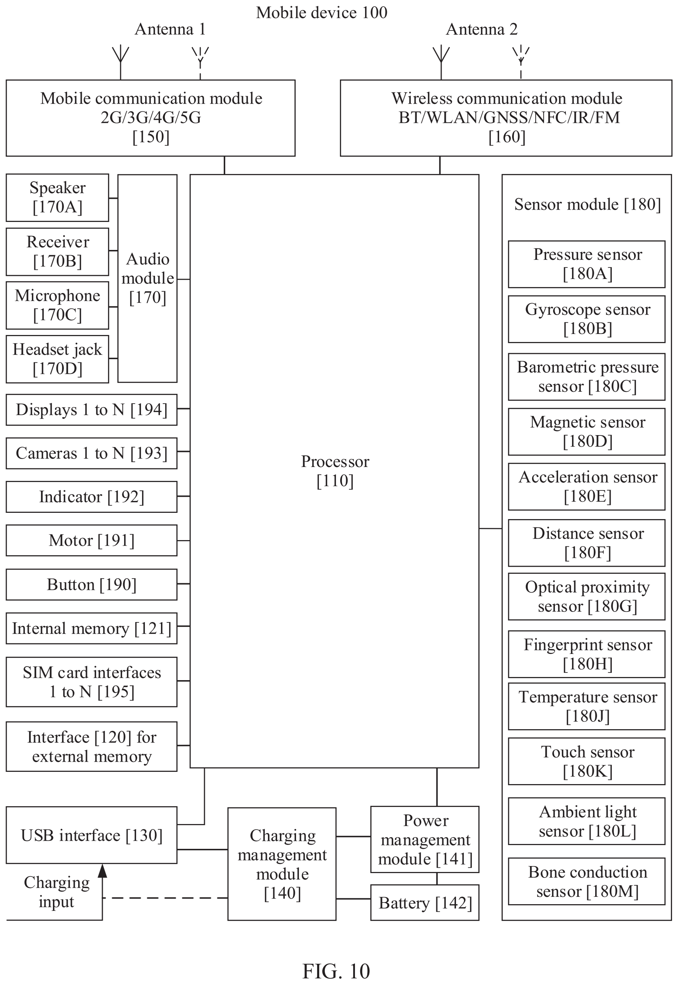

The following describes a structure of a mobile device 100 according to an embodiment of this application. FIG. 10 is a diagram of a structure of the mobile device 100.

The mobile device 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the mobile device 100. In some other embodiments of this application, the mobile device 100 may include more or fewer components than those shown in the figure, or a combination of some components, or splits from some components, or an arrangement of different components. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on instruction operation code and a time sequence signal, to complete control of instruction reading and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor 110 may directly invoke the instructions or the data from the memory. This avoids repeated access, and reduces waiting time of the processor 110, to improve system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus, and includes a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the mobile device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be configured to perform audio communication, and sample, quantize, and code an analog signal. In some embodiments, the audio module 170 may be coupled to the wireless communication module 160 through a PCM bus interface. In some embodiments, the audio module 170 may alternatively transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is configured to perform asynchronous communication. The bus may be a bidirectional communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component like the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the mobile device 100. The processor 110 communicates with the display 194 through the DSI interface, to implement a display function of the mobile device 100.

The GPIO interface may be configured by using software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The USB interface 130 is an interface that conforms to a USB standard specification, and may be specifically a mini USB interface, a micro USB interface, a USB type-C interface, or the like. The USB interface 130 may be configured to connect to a charger to charge the mobile device 100, or may be configured to perform data transmission between the mobile device 100 and a peripheral device, or may be configured to connect to a headset to play an audio through the headset. The interface may be further configured to connect to another electronic device, for example, an AR device.

It may be understood that an interface connection relationship between the modules shown in this embodiment of the present invention is merely an example for description, and does not constitute a limitation on the structure of the mobile device 100. In some other embodiments of this application, the mobile device 100 may alternatively use an interface connection manner different from that in the foregoing embodiment, or a combination of a plurality of interface connection manners.

The charging management module 140 is configured to receive a charging input from a charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the mobile device 100. When charging the battery 142, the charging management module 140 may further supply power to the electronic device through the power management module 141.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same component.

A wireless communication function of the mobile device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the mobile device 100 may be configured to cover one or more communication frequency bands. Different antennas may be further reused to improve antenna utilization. For example, the antenna 1 may be reused as a diversity antenna of a wireless local area network. In some other embodiments, the antenna may be used in combination with a tuning switch.

The mobile communication module 150 may provide a solution, applied to the mobile device 100, to wireless communication including 2G/3G/4G/5G, or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation. The mobile communication module 150 may further amplify a signal modulated by the modem processor, and convert an amplified signal into an electromagnetic wave for radiation through the antenna 1. In some embodiments, at least some functional modules in the mobile communication module 150 may be disposed in the processor 110. In some embodiments, at least some functional modules in the mobile communication module 150 may be disposed in a same component as at least some modules in the processor 110.

The modem processor may include a modulator and a demodulator. The modulator is configured to modulate a to-be-sent low-frequency baseband signal into a medium/high-frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (which is not limited to the speaker 170A, the receiver 170B, or the like), or displays an image or a video through the display 194. In some embodiments, the modem processor may be an independent component. In some other embodiments, the modem processor may be independent of the processor 110, and is disposed in the same component as the mobile communication module 150 or another functional module.

The wireless communication module 160 may provide a solution, applied to the mobile device 100, to wireless communication including a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processing module. The wireless communication module 160 receives an electromagnetic wave through the antenna 2, performs demodulation and filtering processing on an electromagnetic wave signal, and sends a processed signal to the processor 110. The wireless communication module 160 may further receive a to-be-sent signal from the processor 110, perform frequency modulation and amplification on the signal, and convert a processed signal into an electromagnetic wave for radiation through the antenna 2.

In some embodiments, in the mobile device 100, the antenna 1 and the mobile communication module 150 are coupled, and the antenna 2 and the wireless communication module 160 are coupled, so that the mobile device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The mobile device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the mobile device 100 may include one or N displays 194, where N is a positive integer greater than 1.

The mobile device 100 may implement a photographing function through the ISP, the camera 193, the video codec, the GPU, the display 194, the application processor, and the like.

The ISP is configured to process data fed back by the camera 193. For example, during photographing, a shutter is pressed, and light is transferred to a photosensitive element of the camera through a lens. An optical signal is converted into an electrical signal, and the photosensitive element of the camera transfers the electrical signal to the ISP for processing, to convert the electrical signal into a visible image. The ISP may further perform algorithm optimization on noise and brightness of the image. The ISP may further optimize parameters such as exposure and a color temperature of a shooting scene. In some embodiments, the ISP may be disposed in the camera 193.

The camera 193 is configured to capture a static image or a video. An optical image of an object is generated through the lens, and is projected onto the photosensitive element. The photosensitive element may be a charge-coupled device (charge-coupled device, CCD) or a complementary metal-oxide-semiconductor (complementary metal-oxide-semiconductor, CMOS) phototransistor. The photosensitive element converts an optical signal into an electrical signal, and then transfers the electrical signal to the ISP to convert the electrical signal into a digital image signal. The ISP outputs the digital image signal to the DSP for processing. The DSP converts the digital image signal into an image signal in a standard format like RGB or YUV. In some embodiments, the mobile device 100 may include one or N cameras 193, where N is a positive integer greater than 1.

The digital signal processor is configured to process a digital signal, and may process another digital signal in addition to the digital image signal. For example, when the mobile device 100 selects a frequency, the digital signal processor is configured to perform Fourier transform on frequency energy.

The video codec is configured to compress or decompress a digital video. The mobile device 100 may support one or more video codecs. In this way, the mobile device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information by referring to a structure of a biological neural network, for example, by referring to a mode of transfer between human brain neurons, and may further continuously perform self-learning. Applications such as intelligent cognition of the mobile device 100 may be implemented through the NPU, for example, image recognition, facial recognition, speech recognition, and text understanding.

The internal memory 121 may include one or more random access memories (random access memories, RAMs) and one or more non-volatile memories (non-volatile memories, NVMs).

The random access memory may include a static random access memory (static random access memory, SRAM), a dynamic random access memory (dynamic random access memory, DRAM), a synchronous dynamic random access memory (synchronous dynamic random access memory, SDRAM), a double data rate synchronous dynamic random access memory (double data rate synchronous dynamic random access memory, DDR SDRAM, for example, a fifth-generation DDR SDRAM is usually referred to as a DDR5 SDRAM), or the like. The non-volatile memory may include a magnetic disk storage device and a flash memory (flash memory).

The flash memory may be classified, based on an operation principle, into an NOR flash, an NAND flash, a 3D NAND flash, and the like; may be classified, based on a quantity of electric potential levels of a cell, into a single-level cell (single-level cell, SLC), a multi-level cell (multi-level cell, MLC), a triple-level cell (triple-level cell, TLC), a quad-level cell (quad-level cell, QLC), and the like; or the flash memory may be classified, based on storage specifications, into a universal flash storage (English: universal flash storage, UFS), an embedded multimedia memory (embedded multimedia Card, eMMC), and the like.

The random access memory may be directly read and written by the processor 110. The random access memory may be configured to store an executable program (for example, machine instructions) in an operating system or another running program, and may be further configured to store data of a user, data of an application, and the like.

The non-volatile memory may also store the executable programs, the data of the user, the data of the application, and the like, which may be loaded into the random access memory in advance to be directly read and written by the processor 110.

The interface 120 for external memory may be configured to connect to an external non-volatile memory, to extend a storage capability of the mobile device 100. The external non-volatile memory communicates with the processor 110 through the interface 120 for external memory, to implement a data storage function. For example, files such as music and videos are stored in the external non-volatile memory.

The mobile device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for an output, and is also configured to convert an analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The mobile device 100 may be configured to listen to music or answer a call in a hands-free mode through the speaker 170A.

The receiver 170B, also referred to as an "earpiece", is configured to convert an audio electrical signal into a sound signal. When answering a call or receiving voice information, the mobile device 100 may receive a voice by placing the receiver 170B close to the human ear.

The microphone 170C, also referred to as a "mike" or a "mic", is configured to convert a sound signal into an electrical signal. When making a call or sending voice information, a user may make a sound near the microphone 170C through the mouth of the user, to input a sound signal to the microphone 170C.

The headset jack 170D is configured to connect to a wired headset. The headset jack 170D may be a USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and may convert the pressure signal into an electrical signal. In some embodiments, the pressure sensor 180A may be disposed on the display 194.

The gyroscope sensor 180B may be configured to determine a moving posture of the mobile device 100. In some embodiments, an angular velocity of the mobile device 100 around three axes (namely, axes x, y, and z) may be determined through the gyroscope sensor 180B.

The barometric pressure sensor 180C is configured to measure barometric pressure. In some embodiments, the mobile device 100 calculates an altitude through the barometric pressure measured by the barometric pressure sensor 180C, to assist in positioning and navigation.

The magnetic sensor 180D includes a Hall sensor. The mobile device 100 may detect opening and closing of a flip cover through the magnetic sensor 180D.

The acceleration sensor 180E may detect accelerations in various directions (usually on three axes) of the mobile device 100.

The distance sensor 180F is configured to measure a distance. The mobile device 100 may measure the distance through infrared or laser.

The optical proximity sensor 180G may include, for example, a light-emitting diode (LED), and an optical detector, for example, a photodiode.

The ambient light sensor 180L is configured to sense ambient light brightness. The mobile device 100 may adaptively adjust brightness of the display 194 based on the perceived ambient light brightness.

The fingerprint sensor 180H is configured to collect a fingerprint. The mobile device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the mobile device 100 executes a temperature processing policy by using the temperature detected by the temperature sensor 180J.

The touch sensor 180K is also referred to as a "touch component". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor 180K. The touch sensor may transfer the detected touch operation to the application processor, to determine a type of a touch event. A visual output related to the touch operation may be provided through the display 194. In some other embodiments, the touch sensor 180K may alternatively be disposed on a surface of the mobile device 100 at a location different from that of the display 194.

The bone conduction sensor 180M may obtain a vibration signal. In some embodiments, the bone conduction sensor 180M may obtain a vibration signal of a vibration bone of a human vocal-cord part.

The button 190 includes a power button, a volume button, and the like. The button 190 may be a mechanical button, or may be a touch button. The mobile device 100 may receive a button input, and generate a button signal input related to user settings and function control of the mobile device 100.

The motor 191 may generate a vibration prompt. The motor 191 may be configured to provide an incoming call vibration prompt and a touch vibration feedback.

The indicator 192 may be an indicator light, and may be configured to indicate a charging status and a power change, or may be configured to indicate a message, a missed call, a notification, and the like.

The SIM card interface 195 is configured to connect to a SIM card.

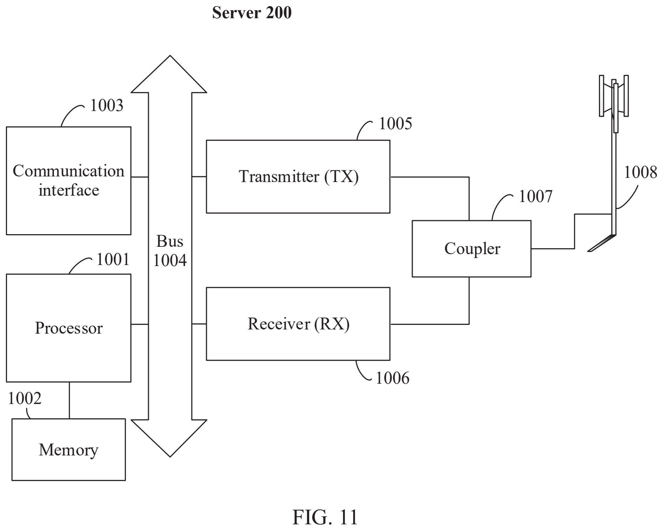

The following describes a structure of a server 200 according to an embodiment of this application. FIG. 11 shows an example of a structure of a server 200 according to an embodiment of this application.

As shown in FIG. 11, the server 200 may include one or more processors 1001, a memory 1002, a communication interface 1003, a transmitter 1005, a receiver 1006, a coupler 1007, and an antenna 1008. These components may be connected through a bus 1004 or in another manner. In FIG. 11, for example, the components are connected through the bus.

The communication interface 1003 may be used by the server 200 to communicate with another communication device, for example, a terminal device 100. Specifically, the communication interface 1003 may be a 3G communication interface, a 4G communication interface, a 5G communication interface, a future new radio communication interface, or the like. In addition to a wireless communication interface, a wired communication interface 1003, for example, a local access network (local access network, LAN) interface, may be further configured for the server 200. The transmitter 1005 may be configured to perform transmission processing on a signal output by the processor 1001. The receiver 1006 may be configured to perform reception processing on a mobile communication signal received through the antenna 1008.

In some embodiments of this application, the transmitter 1005 and the receiver 1006 may be considered as a wireless modem. In the server 200, there may be one or more transmitters 1005 and receivers 1006. The antenna 1008 may be configured to convert electromagnetic energy in a transmission line into an electromagnetic wave in free space, or convert an electromagnetic wave in free space into electromagnetic energy in a transmission line. The coupler 1007 is configured to: divide a mobile communication signal received through the antenna 1008 into a plurality of signals, and allocate the plurality of signals to a plurality of receivers 1006.

The memory 1002 is coupled to the processor 1001, and is configured to store various software programs and/or a plurality of groups of instructions. Specifically, the memory 1002 may include a high-speed random access memory, or a non-volatile memory, for example, one or more disk storage devices, a flash memory device, or another non-volatile solid-state storage device. The memory 1002 may store a network communication program, and the network communication program may be configured to communicate with one or more additional devices, one or more terminal devices, and one or more network devices.

In some embodiments of this application, the memory 1002 may be configured to store a program for implementing, on the server 200 side, the application distribution method provided in one or more embodiments of this application. For implementations of the application distribution method provided in one or more embodiments of this application, refer to the foregoing embodiments.

The processor 1001 may be configured to read and execute computer-readable instructions. Specifically, the processor 1001 may be configured to: invoke a program stored in the memory 1002, for example, the program for implementing, on the server 200 side, the application distribution method provided in one or more embodiments of this application, and execute instructions included in the program.

It should be noted that the server 200 shown in FIG. 11 is merely an implementation in embodiments of this application. During actual application, the server 200 may alternatively include more or fewer components. This is not limited herein.

For more details about a function and a working principle of the server 200, refer to related content in the foregoing embodiments. Details are not described herein again.

The implementations of this application may be randomly combined, to achieve different technical effect.

All or some of the foregoing embodiments may be implemented by using software, hardware, firmware, or any combination thereof. When software is used for implementation, all or some of embodiments may be implemented in a form of computer program product. The computer program product includes one or more computer instructions. When the computer program instructions are loaded and executed on a computer, the procedure or functions according to this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like.

A person of ordinary skill in the art may understand that all or some of the procedures of the methods in embodiments may be implemented by a computer program instructing related hardware. The program may be stored in a computer-readable storage medium. When the program is executed, the procedures in the foregoing method embodiments may be performed. The foregoing storage medium includes any medium that can store program code, for example, a ROM, a random access memory RAM, a magnetic disk, or an optical disc.

In conclusion, the foregoing descriptions are merely embodiments of the technical solutions of the present invention, but are not intended to limit the protection scope of the present invention. Any modification, equivalent replacement, improvement, or the like made according to the disclosure of the present invention shall fall within the protection scope of the present invention.

## Claims

1. A device-cloud collaborative rendering method, comprising:
performing, by a first electronic device, basic rendering on the first device-side scene to obtain first basic rendering data, wherein the first electronic device stores at least one device-side scene, and the first device-side scene is any one of the at least one device-side scene;
sending, by the first electronic device, a scene identifier of the first device-side scene and a first advanced rendering type to the server;
sending, by the first electronic device, first status data to the server, wherein the first status data comprises data that is in status data of the first device-side scene and that is related to preprocessing of the first advanced rendering type;
receiving, by the first electronic device, first preprocessing data sent by the server, wherein the first preprocessing data is obtained by the server by performing preprocessing of the first advanced rendering type on the first cloud-side scene after the server updates the first cloud-side scene based on the first status data, wherein the server stores the first cloud-side scene transformed from the first device-side scene for the first advanced rendering type;
obtaining, by the first electronic device, a first image based on the first basic rendering data and the first preprocessing data, wherein the first image has rendering effect of the first advanced rendering type; and
displaying, by the first electronic device, the first image.

2. The method according to claim 1, wherein the method further comprises:
updating, by the first electronic device, scene information of the first device-side scene;
performing, by the first electronic device, basic rendering on an updated first device-side scene, to obtain second basic rendering data;
when a network speed between the first electronic device and the server is lower than a preset value, or a network between the first electronic device and the server is disconnected, determining, by the first electronic device, a second image based on the second basic rendering data; and
displaying, by the first electronic device, the second image.

3. The method according to claim 1, wherein sending, by the first electronic device, the scene identifier of the first device-side scene and the first advanced rendering type to the server comprises:
sending, by the first electronic device, a first request to the server, wherein the first request comprises the scene identifier of the first device-side scene and the first advanced rendering type, the first request is used to trigger the server to perform preprocessing preparation, and the preprocessing preparation comprises loading the first cloud-side scene and preparing a rendering pipeline for preprocessing of the first advanced rendering type;
before sending, by the first electronic device, the first status data to the server, the method further comprises:
receiving, by the first electronic device, confirmation information sent by the server, wherein the confirmation information indicates that the preprocessing preparation is completed; and
sending, by the first electronic device, the first status data to the server comprises:
sending, by the first electronic device, the first status data to the server based on the confirmation information.

4. The method according to any one of claims 1 to 3, wherein the status data of the first device-side scene comprises a part or all of the following: scene identification information, light source information, role information, camera information, and scene update information.

5. The method according to any one of claims 1 to 4, wherein the server stores a first correspondence among the first device-side scene, the first advanced rendering type, and the first cloud-side scene.

6. The method according to any one of claims 1 to 5, wherein the scene identifier of the first device-side scene and the first advanced rendering type are obtained by the first electronic device from an application package of the first application; and
a scene identifier of the first cloud-side scene and the first correspondence among the first device-side scene, the first advanced rendering type, and the first cloud-side scene are deployed on the server during application development of the first application.

7. The method according to any one of claims 1 to 6, wherein the server stores a second cloud-side scene transformed from the first device-side scene for a second advanced rendering type.

8. The method according to any one of claims 1 to 7, wherein receiving, by the first electronic device, the first preprocessing data sent by the server comprises:
receiving, by the first electronic device, the compressed and encoded first preprocessing data sent by the server; and
before obtaining, by the first electronic device, the first image based on the first basic rendering data and the first preprocessing data, the method further comprises:
decoding, by the first electronic device, the received first preprocessing data, to obtain the decoded first preprocessing data.

9. The method according to any one of claims 1 to 8, wherein the first advanced rendering type is global illumination;
the first preprocessing data comprises irradiance that is of each pixel in an imaging picture and that is obtained through global illumination, and the first basic rendering data comprises irradiance of each pixel in an imaging picture obtained through basic rendering; and
irradiance of a pixel at a first coordinate in the first image is equal to a product of irradiance of a pixel at the first coordinate in the first preprocessing data and irradiance of a pixel at the first coordinate in the first basic rendering data, and a pixel value of the pixel at the first coordinate in the first image is determined based on the irradiance of the pixel at the first coordinate.

10. A device-cloud collaborative rendering method, wherein the method comprises:
receiving, by the server, a scene identifier of the first device-side scene and a first advanced rendering type that are sent by the first electronic device;
receiving, by the server, first status data sent by the first electronic device, wherein the first status data comprises data that is in status data of the first device-side scene and that is related to preprocessing of the first advanced rendering type;
updating, by the server, the first cloud-side scene based on the first status data, and performing preprocessing of the first advanced rendering type on an updated first cloud-side scene, to obtain first preprocessing data; and
sending, by the server, the first preprocessing data to the first electronic device, wherein
the first preprocessing data is used to fuse first basic rendering data to obtain a first image, the first image has lighting effect of the first advanced rendering type, and the first basic rendering data is obtained by the first electronic device by performing basic rendering on the first device-side scene.

11. The method according to claim 10, wherein receiving, by the server, the scene identifier of the first device-side scene and the first advanced rendering type that are sent by the first electronic device comprises:
receiving, by the server, a first request sent by the first electronic device, wherein the first request comprises the scene identifier of the first device-side scene and the first advanced rendering type; and
before receiving, by the server, the first status data sent by the first electronic device, the method further comprises:
performing, by the server, preprocessing preparation based on the first request, wherein the preprocessing preparation comprises loading the first cloud-side scene and preparing a rendering pipeline for preprocessing of the first advanced rendering type; and
sending, by the server, confirmation information to the first electronic device, wherein the confirmation information indicates that the preprocessing preparation is completed, wherein
the first status data is sent by the first electronic device based on the confirmation information.

12. The method according to claim 10 or 11, wherein the status data of the first device-side scene comprises a part or all of the following: scene identification information, light source information, role information, camera information, and scene update information.

13. The method according to any one of claims 10 to 12, wherein the server stores a first correspondence among the first device-side scene, the first advanced rendering type, and the first cloud-side scene, and before updating, by the server, the first cloud-side scene based on the first status data, the method further comprises:
determining, by the server based on the first correspondence, the scene identifier of the first device-side scene, and the first advanced rendering type, that a to-be-rendered cloud-side scene is the first cloud-side scene.

14. The method according to any one of claims 11 to 13, wherein the scene identifier of the first device-side scene and the first advanced rendering type are obtained by the first electronic device from an application package of the first application; and
a scene identifier of the first cloud-side scene and the first correspondence among the first device-side scene, the first advanced rendering type, and the first cloud-side scene are deployed on the server during application development of the first application.

15. The method according to any one of claims 10 to 14, wherein the server stores a second cloud-side scene transformed from the first device-side scene for a second advanced rendering type.

16. The method according to any one of claims 10 to 15, wherein sending, by the server, the first preprocessing data to the first electronic device comprises:
sending, by the server, the compressed and encoded first preprocessing data to the first electronic device.

17. The method according to any one of claims 10 to 16, wherein the first advanced rendering type is global illumination;
the first preprocessing data comprises irradiance that is of each pixel in an imaging picture and that is obtained through global illumination, and the first basic rendering data comprises irradiance of each pixel in an imaging picture obtained through basic rendering; and
irradiance of a pixel at a first coordinate in the first image is equal to a product of irradiance of a pixel at the first coordinate in the first preprocessing data and irradiance of a pixel at the first coordinate in the first basic rendering data, and a pixel value of the pixel at the first coordinate in the first image is determined based on the irradiance of the pixel at the first coordinate.

18. The method according to any one of claims 10 to 16, wherein the method further comprises:
if the first preprocessing data is preprocessing data unrelated to a field of view, sending, by the server, the first preprocessing data to the second electronic device, wherein the first electronic device and the second electronic device are electronic devices of users participating in a same instance of the first device-side scene.

19. An electronic device, comprising one or more processors and one or more memories, wherein the one or more memories are coupled to the one or more processors, the one or more memories are configured to store a computer program, and when the computer program is run on the processor, the electronic device is enabled to perform the method according to any one of claims 1 to 9.

20. A server, comprising one or more processors and one or more memories, wherein the one or more memories are coupled to the one or more processors, the one or more memories are configured to store a computer program, and when the computer program is run on the processor, the server is enabled to perform the method according to any one of claims 10 to 18.

21. A computer-readable medium, storing a computer program, wherein the computer program is capable of being executed by a processor to implement the method according to any one of claims 1 to 18.
